# EUROPEAN PATENT SPECIFICATION

(11) **EP 3 720 014 B1**
(45) Date of publication and mention of the grant of the patent: **21.10.2026**
(21) Application number: 20168343.0
(22) Date of filing: 28.02.2011
(51) Int. Cl.: H04B 10/00, H04M 19/08, H04B 10/80

(54) **SYSTEM AND METHOD FOR A SUBSCRIBER-POWERED NETWORK ELEMENT**
SYSTEM UND VERFAHREN FÜR EIN TEILNEHMERBETRIEBENES NETZWERKELEMENT
SYSTÈME ET PROCÉDÉ POUR UN ÉLÉMENT DE RÉSEAU ALIMENTÉ PAR L'ABONNÉ

(30) Priority: 28.02.2010 US 71454310
(43) Date of publication of application: 07.10.2020
(62) Document number(s) of the earlier application(s) in accordance with Art. 76 EPC: 11748222.4 / 2 540 012
(73) Proprietor: Soto, Alexander, Las Vegas NV 89101 (US); Soto, Walter, Las Vegas NV 89135 (US)
(72) Inventor: Soto, Alexander, Las Vegas NV 89101 (US); Soto, Walter, Las Vegas NV 89135 (US)
(74) Representative: Meissner Bolte Nürnberg

(56) References cited:
- US-A1- 2006 285 802
- US-A1- 2007 028 122
- US-A1- 2008 159 744
- US-A1- 2008 181 393

## Description

### FIELD OF THE INVENTION

The invention relates to a method for electrically powering a network element of a wide area network by a first subscriber terminal and to a system for powering a network element of a fiber optic wide area network.

### BACKGROUND OF THE INVENTION

With increasing customer or subscriber demand for transmitting and receiving increasingly greater amounts of information, telecommunication and broadband cable communication companies are being pushed to upgrade their wide area network (WAN) or broadband access communication network infrastructures. In order to supply more information in the form of video, audio and telephony at higher rates, higher bandwidth communication network upgrades or new deployments are required. Twisted wire pair cable, such as used in plain old telephone services, do not support high bandwidths over a great distance; and while coaxial cables, such as used in cable television services, do a better job, it too has reach and bandwidth limitations. Optical fiber can provide virtually unlimited bandwidth thus enabling broadband and multimedia services.

Modern telephone wide area network access infrastructures, such as fiber in the loop networks (FITL), utilize a combination of fiber optics and twisted wire pair to send and receive data communications to and from a subscriber. While modern cable wide area network access infrastructures, such as Hybrid Fiber Coaxial networks (HFC), utilize a combination of fiber optic and coaxial cable to send and receive data communications to and from a subscriber. Generally, subscribers are served by twisted wire pair in the last mile or so of the telecommunication networks or by coaxial cable within the last two to three miles or so of cable networks. In order to achieve greater bandwidth rates at a subscriber location, the fiber optic network must be brought closer to the subscriber so that the copper drop (e.g., twisted wire pair or coaxial cable) is of a sufficiently short distance and will be capable of supporting increased data transfer rates.

One major problem with bringing fiber cable within a short distance of a subscriber location is the added burden of maintaining the multitude of optical to copper drop sites. These drop sites are network elements that are called optical network units (ONUs) or optical network terminals (ONTs) in telecommunication networks and optical node (or simply a node) in hybrid fiber cable networks and generally serve to convert information between the optical domain of a fiber and electrical domain of a twisted pair or coaxial cable.

A significant part of the provisioning and maintenance of these drop sites by Service Providers or their affiliates (e.g., broadband access service provider, application service providers, internet service providers, managed service providers, master managed service providers, managed internet service providers, telecommunication service providers, campus service providers, cable service providers) is supplying the electrical power required. Optical fiber itself is not capable of carrying the electricity to power these drop sites. This creates a challenge in planning, distributing and deployment of electricity to power the drop site energy needs. Furthermore, reserve power must also be provided if the main power supply to the drop site fails and with enough reserve powering capacity capable of meeting performance and reliability requirements of the network for several hours or even days. This is often the case with Lifeline telephony service, which is required in plain old telephone service networks. Lifeline telephone means that the subscriber telephones must remain energized and operational during an AC supply power interruption or outage at the subscriber premise.

The drop sites are typically centrally powered from a Service Provider or affiliates' distributed copper facility or a power node located near a cluster of drop sites, or locally powered from a nearby commercial or utility electrical power source, or with solar photovoltaic energy.

In the case of centralized power, power is typically provided over new or existing copper facilities from a central office (CO). Power can also be provided on separate twisted wire pair or coaxial cable that are bonded to the outside of a fiber cable bundle, woven within a fiber optical cable bundle or deployed separately with the fiber during installation of the fiber from the central office. However, centralized power is a strategy that requires a separate power network to be deployed that is separate from the information network. With increasing distances between a central office or head end to the remote drop sites increased voltages are required on the power network to feed the drop site energy needs. Increased voltages raise craft safety issues. Alternatively, the power network may be augmented with power nodes located near a cluster of drop sites, however additional metallic enclosures increase susceptibility to electrical surges caused by lightning and power-line induction. Furthermore, there is the 24-hour a day cost of supplying electricity to the power network, as well as regular maintenance and support of the power network itself including regular replacement of batteries for Lifeline services, which are generally located at the CO or head end.

In the case of locally powered drop sites, power is derived near a drop site and reserve power is provided with batteries at the drop site. The primary energy source for this architecture is commercial AC power tapped directly from a power utility's facility. The power supply is placed in a small environmentally hardened enclosure that could be co-located with a drop site; however, the batteries are generally in the same enclosure as the drop site. This results in a large number of battery sites and power access points. Generally the cost of this type of system is high primarily due to the cost of connecting drop sites to a commercial power source. Regional power utility companies may insist on metered connections to their power grid, incurring a one-time ac meter installation and connection charge to be levied. Additionally a minimum monthly meter charge may be levied regardless of usage. This poses a major problem when the monthly energy consumption of a drop site is significantly lower than the minimum charge.

In the case of electrically powering the communication network infrastructure locally with solar power, this strategy minimizes some of the disadvantages of centralized and locally powering such as vulnerability to lightning and limited battery reserve, allowing fiber to be the sole distribution facility. Solar panels and large batteries are co-located at drop sites, which power the drop sites continuously without any connection to any power grid. However, its use is limited to areas with direct access to sunlight as the output of solar panels decreases with a reduction in incident solar energy. Therefore, this strategy cannot be used everywhere. In addition, solar power requires batteries of large capacity (Wh) to be installed.

As such, a need exists for powering a fiber optic communication network element that brings optical access fiber within a short distance of a subscriber premise or customer location. The electrical powering strategy or architecture of the fiber optic wide area network must be capable of supporting and operating the multitude of drop sites or network elements in a cost effective and maintainable manner.

US 2008/159744 A1 discloses a system for powering a network element of a fiber optic communication network. When communication data is transferred between a central office (CO) and a subscriber gateway using a network element to convert optical to electrical (O-E) and electrical to optical (E-O) signals between a fiber from the central office and copper wires or coax cable from the subscriber gateway, techniques related to local powering of a network element or drop site by a subscriber or customer remote device or gateway are provided. Certain advantages and/or benefits are achieved using the present invention, such as freedom from any requirement for additional meter installations or meter connection charges. Additionally, the system is free of monthly meter charges and does not require a separate power network.

### BRIEF SUMMARY OF THE INVENTION

The invention is defined by the appended independent claims. Embodiments of the invention result from the dependent claims and the description below.

According to the present invention, a method for electrically powering a network element of a wide area network by a first subscriber terminal is provided. The method comprises, at the network element, applying a first predetermined resistive load to a first electrical port of the network element for the purpose of being detectable by the first subscriber terminal using a first low-level detection current; receiving a first electrical power through the first electrical port of the network element responsive to applying the first predetermined resistive load, and wherein the first electrical power has additional current and/or voltage than the first low-level detection current. The method further comprises, converting the first electrical power for use by the network element; receiving optical data communications though an optical port of the network element; converting the optical data communications to electrical service provider data communications; de-aggregating the electrical service provider data communications to one or more subscriber data communications; and transmitting at least one of the one or more subscriber data communications to the first subscriber terminal though the first electrical port. Further according to the present invention, a system for powering a network element of a fiber optic wide area network is provided. The system comprises a network element, at least one subscriber terminal, at least one electrical wire pair or cable and at least one optical fiber. The network element comprises at least one optical port wherein each optical port is configured to couple to the at least one optical fiber and wherein each optical port is disposed to include at least one optical transceiver. The network element further comprises at least one electrical port configured for coupling to the at least one electrical wire pair or cable for communicating with the at least one subscriber terminal. Furthermore, the network element comprises at least one first electrical coupling device electrically coupled to the at least one electrical port and configured to support detection of the network element by the at least one subscriber terminal through application of a predetermined resistive load for the purpose of being detectable by the at least one subscriber terminal using a low-level detection current across the at least one electrical wire pair or cable, and wherein the at least one first electrical coupling device is adapted to pass an electrical power having additional current and/or voltage than the low-level detection current received through the at least one electrical port to an at least one power converter responsive to application of the predetermined resistive load, and wherein the at least one first electrical coupling device is adapted to convey communications through the at least one electrical port. Further, the network element comprises at least one of a first communication device electrically coupled to the at least one first electrical coupling device for communicating with the at least one subscriber terminal; a second communication device electrically coupled to the at least one of a first communication device and electrically coupled to the at least one optical port, and wherein the second communication device is for optical communication through the at least one optical port. Even further, the network element comprises at least one power converter electrically coupled to the at least one first electrical coupling device for converting the electrical power for use by the network element, whereby the network element is powered by the at least one subscriber terminal. The at least one subscriber terminal comprises a power source for producing an electrical power signal having a current and a voltage, a second electrical coupling device, and a third communication device.

Certain advantages and/or benefits may be achieved using embodiments of the present invention. For example, the embodiments of the present invention have the advantage of being free of any requirement for additional meter installations or meter connection charges. Additionally, embodiments of the present invention have the advantage of reducing labor installation time and costs and enabling subscriber self installation. Furthermore, embodiments of the present invention do not create a separate power network. The information network and the power network are the same network in that they share the same transmission line (e.g., twisted copper wire pair or twisted wire pair, coaxial cable or Ethernet cable), thus the communication network can be powered in a cost effective and maintainable manner.

In general, in one aspect, an embodiment of the invention includes a system for powering a network element of a fiber optic wide area network, such as a fiber in the loop network, which transmits communication data between a central office (CO) and subscriber terminal or customer premise equipment. The network element, such as a drop site, having an at least one optical port and at least one electrical port, serves, among other functions, to convert optical-to-electrical (O-E) and electrical-to-optical (E-O) signals carrying information between a fiber from the central office and twisted wire pair to the subscriber terminal. The subscriber terminal or a remote user device further includes a DC power source, a communication device such as a high-speed client modem, and an electrical coupling device such as a Subscriber Line Interface Circuit (SLIC) device that includes means for coupling the communications of the client modem and the DC power output of the DC power source on to the same physical communication medium. The network element further includes a communication device such as a high-speed CO modem, a DC-to-DC power converter, and an electrical coupling device such as a Data Access Arrangement (DAA) device that includes means for coupling the electrical communications of the CO modem and deliver DC power from the subscriber terminal to the network element's DC-to-DC power supply converter. A pair of twisted wires that is in electrical communication between the subscriber terminal and the network element serves as a medium for DC power transfer to the network element and for modem communications. In this way, the network element is powered by the subscriber premise over the twisted wire pair cable and the modems are in communication over the same twisted wire pair cable.

Aspects of an exemplary embodiment of the invention may include one or more of the following features. The fiber optic wide area network is a fiber in the loop network such as a Fiber to the Curb (FTTC) network, a Fiber to the Premise (FTTP) network, a Fiber to the Node (FTTN) network, a Fiber to the Basement (FTTB) network, a Fiber to the Cell Tower network or some combination thereof. Furthermore, the Fiber in the loop network may be a point-to-point network or a point-to-multipoint network, such as a Passive Optical Network (PON). For example, the Fiber in the loop network may be a point-to-point Fiber to the Curb network (FTTC-P2P) or a passive optical Fiber to the Curb network (FTTC-PON) implementation. The communication devices or modems, according to an exemplary embodiment of the invention, may be Digital Subscriber Line (xDSL) type of modems such as Asymmetric Digital Subscriber Line (ADSL) modems, Very-high-bit-rate Digital Subscriber line (VDSL) modems, or Very-high-bit-rate Digital Subscriber Line 2 (VDSL2) modems. The communication devices or modems may also be Power Line, also called Power Line Communication or Power Line Carrier (PLC), modems. Additionally, the communication devices or modems may be ITU-T G.hn modems. The electrical coupling devices such as the SLIC and DAA devices may comprise coupling capacitors, coupling transformers, blocking inductors, or perform inductive coupling. Furthermore, the SLIC and DAA devices may include elements for low pass filtering, bandpass filtering, and/or high pass filtering. The SLIC device will limit the current of the transmitted DC power to non-hazardous levels for the potential of unprotected human contact. The pair of twisted wires is a twisted wire pair wire such as 22, 24 or 26 gauge twisted wire pair, but may also be a single pair from a category 3 cable, or a single pair from a category 5 cable. The network element that is powered by the subscriber maybe an optical network unit (ONU) or an optical network terminal (ONT). The subscriber terminal, customer premise equipment or remote user device may further include one or more of the following features for remote user use: an Ethernet local area network (LAN), a WiFi network, a Voice over IP (VoIP) service, an IPTV service, interactive broadband communications services or combination thereof. The subscriber terminal, customer premise equipment or remote user device my also provide Plain Old Telephone Service (POTS) or Analog Telephone Adaptor (ATA) functions and include a battery backup in case of subscriber mains power loss to provide lifeline support. The battery may be user, customer or subscriber replaceable. The battery may also be located at the network element. The DC power supply at the subscriber or customer premise may be a DC-to-DC power supply or an AC-to-DC power supply and the electrical power may be derived from the subscriber mains power by the DC-to-DC or AC-to-DC power supply.

In another aspect, an exemplary embodiment of the invention includes a system for powering a network element of a fiber optic wide area network, such as a fiber to the premise (FTTP) network, which enables broadband communications between a CO and a subscriber or customer. The network element, such as an ONU or ONT, generally, at a high level description, serves to convert information from the optical domain of optical fiber coming to the network element from a CO to electrical signals on twisted wire pairs or that run between the network element and a subscriber terminal or customer premise equipment. The ONU or ONT is located at the subscriber or customer premise, specifically at the point of demarcation or network interface device (NID). Alternatively, the ONT can be located within the subscriber or customer premise (i.e. on the subscriber's side of the NID) when allowed by local regulation. While not shown in the following exemplary embodiments of the present invention, alternative embodiments with the ONT inside the subscriber's premise are possible and implied. The subscriber terminal or a remote user device further includes an electrical coupling device such as a Power over Ethernet (PoE) Power Sourcing Equipment (PSE) and a communication device such as an Ethernet PHY device. The PSE is coupled to two or four pairs of wires, such as in a category 5 cable, to the ONU or ONT at the NID. The ONU or ONT further includes an electrical coupling device such as a PoE Powered Device (PD) that accepts power from the PSE and powers the ONU or ONT. Additionally the ONU or ONT includes a second communication device such as an Ethernet PHY device enabling Ethernet communication between the subscriber terminal or remote user device and the ONU or ONT at the NID. In this way, the network element is powered by Power over Ethernet from a subscriber or customer premise and capable of communications with the subscriber terminal over the same pairs of wires. The subscriber terminal, customer premise equipment or remote user device may further include one or more of the following features for remote user use: an Ethernet local area network (LAN), a WiFi network, a Voice over IP (VoiP) service, an IPTV service or interactive broadband communications services or combination thereof.

In one aspect, an exemplary embodiment includes a system for powering a first network element of a fiber optic wide area network, such as a hybrid fiber coaxial network, which transmits communication data between a head-end and a subscriber terminal or customer premise equipment. The first network element, such as a drop site, serves to convert optical to electrical (O-E) and electrical to optical (E-O) signals between a fiber from the head-end and coaxial cable to the subscriber terminal. The subscriber terminal or a remote user device further includes a DC power source, a communication device such as a high-speed client modem or client network device, and a first electrical coupling device that includes means for coupling the communications of the client modem or client network device to the DC power output of the DC power source. The network element further includes a communication device such as a high-speed head-end modem or access network controller device, a DC-to-DC power converter, and a second electrical coupling device that includes means for coupling communications of the head-end modem or network access controller device and delivers DC power to the DC-to-DC power converter. A coaxial cable that is coupled between the subscriber terminal and the network element serves the medium for DC power transfer to the network element and for network communications. In this way, the first network element is powered by the subscriber terminal over the coaxial cable and the modems or network devices are in communication over the same coaxial cable.

Aspects of an exemplary embodiment of the invention may include one or more of the following features. The communication devices or modems, according to an embodiment of the invention, may be Data Over Cable Service Interface Specification (DOCSIS) modems. The communication devices or modems may be Power Line, also called Power Line Communication or Power Line Carrier (PLC), modems. The communication devices or network devices may also be HomePNA, Multimedia over Coax Alliance (MoCA) or ITU-T G.hn capable devices. The first and second electrical coupling devices may comprise coupling capacitors, coupling transformers, isolation transformers, center-tapped transformers, blocking inductors, common mode chokes or perform inductive coupling. Furthermore, the first and second electrical coupling devices may include elements for low pass filtering, bandpass filtering, and/or high pass filtering. The first electrical coupling device will limit the current of the DC power transferred to the network element to non-hazardous levels. The first network element that is powered by the subscriber terminal maybe an optical node, network node or simply node. The subscriber terminal, customer premise equipment or remote user device may further include one or more of the following features for remote user use: an Ethernet local area network (LAN), a WiFi network, a Voice over IP (VoiP) service, or an IPTV service. The subscriber terminal, customer premise equipment or remote user device my also provide Plain Old Telephone Service (POTS) and include a battery backup in case of subscriber main power loss to provide lifeline support. The battery may be user, customer or subscriber replaceable at or near the subscriber terminal or CPE. The battery may also be located at the network element. The DC power supply at the subscriber or customer premise may be a DC-to-DC power supply or an AC-to-DC power supply. A second network element, such as a tap, may further contain a device that combines the power and communication from one or more coaxial cables from other subscribers or customer premises to the first network element or node. The first network element may be capable of being powered from the power received from a single subscriber or customer premise.

### BRIEF DESCRIPTION OF THE DRAWINGS

**FIG. 1a** is a block diagram illustration of a Fiber-to-the-Curb (FTTC) or Fiber-to-the-Node (FTTN) point-to-multipoint passive optical network (PON) with an ONU network element powered by a subscriber's customer premise equipment (CPE) or subscriber terminal (ST) using a single twisted wire pair, in accordance with an embodiment of the present invention.
**FIG. 1b** is a block diagram illustration of a Fiber-to-the-Curb (FTTC) or Fiber-to-the-Node (FTTN) point-to-multipoint passive optical network (PON) with an ONU network element powered by a subscriber terminal or CPE using a single twisted wire pair, in accordance with an embodiment of the present invention.
**FIG. 2** is a flow chart illustration of a method of an embodiment of the present invention for powering a network element with twisted wire pair cable.
**FIG. 3** is a block diagram illustration of a FTTC or FTTN point-to-point (PtP) optical wide area network with an ONU network element powered by a subscriber's CPE or ST using a single twisted wire pair wire, in accordance with an embodiment of the present invention.
**FIG. 4** is a block diagram illustration of a FTTC or FTTN point-to-multipoint PON with an ONU network element powered by a subscriber's CPE or ST using a single twisted wire pair while CO provides Lifeline powering across same twisted wire pair, in accordance with an embodiment of the present invention.
**FIG. 5** is a block diagram illustration of a Fiber-to-the-Premise (FTTP) point-to-multipoint PON with an ONT network element powered by a subscriber's CPE or ST using a single twisted wire pair wire, in accordance with an embodiment of the present invention.
**FIG. 6** is a block diagram illustration of a FTTP point-to-multipoint PON with an ONT network element powered by a subscriber's CPE or ST using a single twisted wire pair with the CO providing Lifeline powering for Plain Old Telephone Service (POTS) using a second twisted wire pair wire, in accordance with an embodiment of the present invention.
**FIG. 7a** is a block diagram illustration of a FTTP point-to-multipoint PON with an ONT network element powered by a subscriber's CPE or ST using Power over Ethernet (PoE) over a single Ethernet cable, in accordance with an embodiment of the present invention.
**FIG. 7b** is a block diagram illustration of a FTTP point-to-multipoint PON with an ONT network element and a CPE/ST powered by another CPE/ST using Power over Ethernet (PoE) over a single Ethernet cable, in accordance with an embodiment of the present invention.
**FIG. 7c** is a block diagram illustration of a FTTP point-to-multipoint PON with an ONT network element powered a CPE/ST using Power over Ethernet (PoE) over a single Ethernet cable, in accordance with an embodiment of the present invention.
**FIG. 8** is a flow chart illustration of a method of an embodiment of the present invention for powering a network element utilizing Power over Ethernet (PoE).
**FIG. 9a** is a block diagram illustration of a FTTP point-to-point optical network with an ONT network element powered by subscriber's CPE or ST using Power over Ethernet (PoE) over a single Ethernet cable, not according to the present invention.
**FIG. 9b** is a block diagram illustration of a FTTP point-to-point optical network with an ONU network element powered by subscriber's CPE or ST using Power over Ethernet (PoE) over a single Ethernet cable, not according to the present invention.
**FIG. 10** is a block diagram illustration of a FTTC or FTTN point-to-multipoint PON with an ONU network element powered by a subscriber's CPE or ST using a coaxial cable, in accordance with an embodiment of the present invention.
**FIG. 11** is a flow chart illustration of a method of an embodiment of the present invention for powering a network element utilizing power over coaxial cable.
**FIG. 12** is a block diagram illustration of a FTTP point-to-point optical network with an ONT network element powered by subscriber's CPE or ST using power over coaxial cable, in accordance with an embodiment of the present invention.
**FIG. 13a** is a block diagram illustration of a FTTP point-to-multipoint PON with an ONT network element powered by a subscriber's CPE or ST using a coaxial cable, not according to the present invention.
**FIG. 13b** is a block diagram illustration of a FTTP point-to-multipoint PON with an ONT network element powered by a subscriber's CPE or ST using a coaxial cable, not according to the present invention.
**FIG. 14a** is a block diagram illustration of a FTTC or FTTN point-to-multipoint PON with an ONU network element powered by a subscriber's CPE or ST using a coaxial cable, not according to the present invention.
**FIG. 14b** is a block diagram illustration of a FTTC or FTTN point-to-multipoint PON with an ONU network element powered by a subscriber's CPE or ST using a coaxial cable, not according to the present invention.
**FIG. 15a** is an illustration of an exemplary circuit model of an electrical coupling device for combining data communications and electrical power.
**FIG. 15b** is an illustration of an exemplary circuit model of an electrical coupling device for combining data communications and DC electrical power in view of **FIG. 1a****.**
**FIG. 15c** is an illustration of an exemplary circuit model of an electrical coupling device for combining data communications and AC electrical power in view of **FIG. 1a****.**
**FIG. 16a** is an illustration of an exemplary circuit model of an electrical coupling device for combining Ethernet communications and DC electrical power.
**FIG. 16b** is an illustration of an exemplary circuit model of an electrical coupling device for combining Ethernet communications and DC electrical power in view of **FIG. 7a****.**
**FIG. 17a** is an illustration of an exemplary circuit model of an electrical coupling device for combining data communications and DC electrical power.
**FIG. 17b** is an illustration of an exemplary circuit model of an electrical coupling device for combing data communications and DC electrical power in view of **FIG. 10****.**
**FIG. 18** is an illustration of a chart depicting the frequency spectrum of various communication protocols.

### DETAILED DESCRIPTION

Reference will now be made in detail to various exemplary embodiments, examples of which are illustrated in the accompanying drawings. The invention is defined by the enclosed independent claims. Embodiments of the invention result from the dependent claims and the detailed description below. In the following detailed description, numerous specific details are set forth in order to provide a thorough understanding of the present invention as defined in the enclosed independent claims. In other instances, well-known methods, procedures, components, and circuits have not been described in detail as not to unnecessarily obscure aspects of the present invention as defined in the enclosed independent claims.

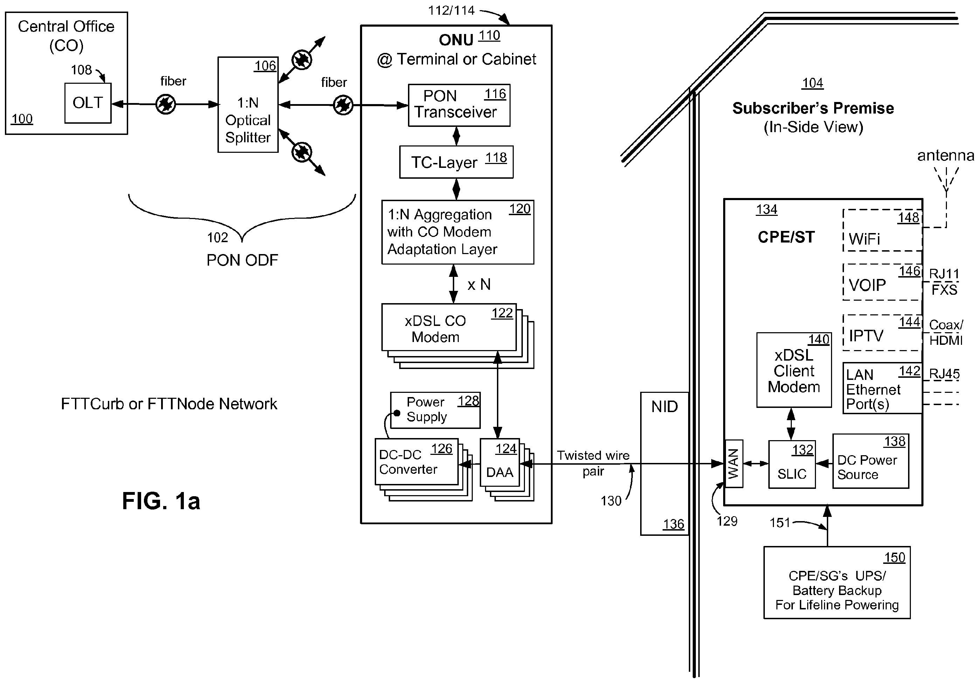

Referring now to **FIG. 1a****,** wherein like reference numerals designate identical or corresponding parts throughout several views and embodiments; and wherein cascading boxes below a part designates a plurality of such parts, an exemplary embodiment of an electrical power architecture for a fiber optic wide area network is shown incorporating a subscriber-powered network element, according to the present invention. A FTTC or FTTN network using a PON (e.g., B-PON ITU-T G.983, G-PON ITU-T G.984, XG-PON ITU-T G.987, E-PON IEEE 802.3ah, 10G-EPON IEEE 802.3av, WDM-PON, or RFoG SCTE IPS910) connects a central office (CO) **100** at the head end of a passive optical distribution fabric (ODF) **102** to a subscriber premise **104.** The subscriber premise **104** may be a residential home, a multi-dwelling unit (MDU), a commercial building, or a cell tower. The passive ODF **102** is comprised of a plurality of passive optical splitters **106** and connectors (not shown). An Optical Line Terminal (OLT) **108,** which is generally located at the CO **100** but may be located in a remote or outside plant (OSP) cabinet, acts as a central transmission point and an overall controlling device for the network. The OLT **108** is in communication through the ODF **102** with a plurality of Optical Network Units (ONUs) **110** located in neighborhood terminals (also called pedestals) in FTTC networks **112** or in cabinets in FTTN networks **114.**

The OLT **108** transmits and receives data to and from the ONUs **110** in the form of modulated optical light signals of known wavelength through the ODF **102.** The transmission mode of the data sent over the ODF **102** may be continuous, burst or both burst and continuous modes. The transmissions may be made in accordance with a timedivision multiplexing (TDM) scheme or similar protocol. Frequently bi-directional wavelength-division multiplexing (WDM) is used and although the FTTC/FTTN network illustrated in **FIG. 1a** includes an OLT **108** in communication with a plurality of ONUs using a plurality of fibers, other implementations of such networks may only use ONTs or some combination of ONUs **110** and ONTs **110.** In some implementations, the ONUs and ONTs are generally similar. In other implementations, the ONUs and ONTs may differ in one or more aspects. As previously mentioned, the ONUs and ONTs are drop site network elements that generally, at a high level description, serve to convert information between the optical domain of a fiber and electrical domain of a twisted wire pair wire or possibly coaxial cable.

An ONT is a single integrated electronics unit that terminates the PON and presents native service interfaces to the user or subscriber. An ONU is an electronics unit that terminates the PON and may present one or more converged interfaces, such as xDSL or Ethernet, toward the subscriber. An ONU typically requires a separate subscriber unit to provide native user services such as telephony, Ethernet data, or video. In practice, the difference between an ONT and ONU is frequently ignored, and either term is used generically to refer to both classes of equipment. Although in the hybrid fiber coaxial network case, ONUs/ONTs are called nodes, optical nodes or even taps depending on where the fiber network ends and the coaxial cable network begins.

Referring again to **FIG. 1a****,** an exemplary embodiment of an ONU **110** is comprised of the following functional blocks: a PON transceiver **116,** a PON client Transmission Convergence Layer (TC-Layer) unit **118**; a CO modem aggregation and adaptation layer unit **120**; a plurality of Digital Subscriber Line (xDSL, i.e. ADSL, VDSL, or VDSL2) CO modems **122**; a plurality of Digital Access Arrangement (DAA) units **124**; a plurality of DC-to-DC power converters **126,** and a power supply **128.**

The client PON transceiver **116** comprises the necessary components to convert optical-to-electrical (O/E) signal communications from the OLT **108** as well as convert electrical-to-optical (E/O) signal communications and communicate them to the OLT **108.** The PON transceiver **116** may be plugged into or comprise an optical port or socket, the optical port serving as a site for coupling to a fiber and for performing the O/E and E/O conversions. Some embodiments of network elements not according to the invention may be made without optical transceivers, however having an optical port for later installation of an optical transceiver. In embodiments of network elements made with an optical transceiver, the optical port and the optical transceiver are essentially the same. Some form factors for PON transceiver **116** include, but not limited to, SFF, SFP, SFP+, and XFP. The PON transceiver **116** communicates electrically with the TC-Layer **118.** The TC-Layer **118** comprises the functionality of: bundling and sending data into packets or frames; un-bundling and receiving data into packets or frames; managing the transmission of packets or frames on the network via medium access and bandwidth allocation protocols; providing necessary messaging and end point behavior, and checks, reports and may correct for detectable errors. The TC-Layer **118** communicates with both the PON transceiver **116** and optionally an 1:N aggregation and CO modem adaptation layer **120.**

The 1:N aggregation and CO modem adaptation layer **120** has several functions. Modem communications over twisted wire pair transmission lines have lower bandwidth rates than communications over fiber. Thus to efficiently use the higher bandwidth rates of the fiber, the communications from multiple modems may be pooled together. Modem communications from as many as one to some N number, for the purposes of this disclosure, may be aggregated together. In an exemplary embodiment, some 96 modems can be aggregated together. The 1:N aggregation and CO modem adaptation layer **120** communications electrically to an N number of modems. Each modem serving to enable communications to/from a unique subscriber premise **104** over a unique twisted wire pair **130.** Additionally, in some embodiments, multiple modem communications may be binded together to/from a unique subscriber premise to achieve data rates beyond the capability of a single modem, these communications may also be aggregated by the 1:N aggregation and CO modem adaption layer **120.**

Communication devices such as xDSL capable modems **122** are chosen as the preferred modem types however it is envisioned that many types of modems can be used for communications over twisted wire pair wire or even coaxial cable transmission lines to a subscriber premise **104.** The xDSL capable modems of **122** are central office (CO) or head-end type modems. Each modem is in electrical communication with an electrical coupling device such as a DAA **124** and the DAA **124** is coupled to an electrical port or socket (e.g., RJ-11) which is then coupled to twisted wire pair **130.**

A DAA **124** is a mandatory interface that protects electronics connected to a telecommunication network from local-loop disturbances and vice versa. A DAA in general can mean many things because a DAA must perform varied and complex functions, including but not limited to line termination, isolation, hybrid functions, caller-ID and ring detection. A DAA must also provide a loop switch so that the DAA looks on- or off-hook to the loop; detect the state of the line and the incoming ringing signal, as well as include support of full-duplex operation. The International Telecommunication Union Telecommunication Standardization Sector (ITU-T) series G specification for transmission systems and media, digital systems and networks contains many documents, recommendations and specifications regarding DAA, as well as subscriber line interface circuits (SLIC) **132,** specifically ITU-T G 100-109.

For the purpose and needs of an exemplary embodiment of the present invention, the electrical coupling device DAA **124** is a device that: meets local regulatory requirements which differ by country or region; provides a measure of protection for both a network element, such as ONU **110,** and the local-loop such as twisted wire pair **130** transmission line; passes AC and/or DC based signal information to and from a modem, such as xDSL CO modem **122,** as well as decouples or passes DC power (DC current and DC voltage) to a DC-to-DC power converter **126** from a twisted wire pair **130** transmission line. Additionally, the DAA **124** provides isolation protection to the modem from potentially damaging high voltage (e.g., from a lightning strike or malfunctioning equipment) on the twist pair **130.** The DAA **124** device may be of a design that is transformer-based, optically-based, capacitively coupled-based, silicon/integrated circuit-based, or some combination thereof which offer virtues in size, cost, and performance.

As previously mentioned or indicated, the ONU **110** can provide broadband services to a plurality of subscriber premises **104** over twisted wire pair transmission lines. Located in each subscriber premise **104** is a customer premise equipment (CPE) or subscriber terminal (ST) device **134** which is connected to the twisted wire pair **130.** The twisted wire pair **130** passes through the demarcation point or network interface demarcation (NID) **136** to the CPE or ST **134.**

The CPE/ ST **134** device and uninterruptable power supply (UPS) **150** is powered by a subscriber's residential or commercial power outlet which are derived from subscriber mains power (not shown). The exemplary CPE/ST **134** is comprised of the functional blocks: a DC power source **138**; an xDSL client modem **140**; an electrical coupling device such as subscriber line interface circuit (SLIC) **132**; one or more Ethernet LAN ports **142** with appropriate media access (MAC) and PHYs for operation with a subscriber's local area network (LAN); optionally one or more Internet Protocol Television (IPTV) codec and driver **144**; optionally one or more Voice Over IP (VoIP) codec and driver **146** (including FXS circuitry), and optionally one or more IEEE 802.11x (WiFi) transceiver **148.**

The DC Power source **138** may be derived from or be part of a DC-to-DC power supply or an AC-to-DC power supply. The DC Power source **138** provides DC power (DC current and DC voltage), which may be derived from subscriber mains power (e.g., AC power), in one or more power supply rails to the electrical coupling device SLIC **132.**

Generally, SLICs provide the necessary signals, timing, and control functions for the plain old telephone system (POTS) line. SLICs and DAAs perform complementary functions with some overlap. The requisite functions of these devices, although similar at first look, differ enough that implementing the technologies requires different techniques. For example, SLICs act as line power drivers as they send ringing signals down the line and supply line power on to the twisted wire pair transmission line, generally from batteries, to the far end of the line. DAAs, on the other hand, act more like receivers and use the supplied line or loop power.

For the purpose and needs of an exemplary embodiment of the present invention, the electrical coupling device SLIC **132** is a device that: meets local regulatory requirements which differ by country or region; provides a measure of protection for both a network element, such as ONU **110,** and the CPE/ST **104**; passes AC and/or DC based information signal to and from a modem, such as xDSL client modem **140**; accepts DC power (DC current and DC voltage) from a DC power source, such as **138,** and acts as a line power driver driving the accepted DC power and information signal as a combined electrical WAN signal through WAN port **129** and down a twisted wire pair, such as **130.** The SLIC **132** device may be of a design that is transformer-based, optically-based, capacitively coupled-based, silicon/integrated circuit-based, or some combination thereof which offer virtues in size, cost, and performance.

The communication device such as xDSL client modem **140** is a complementary modem to the xDSL CO modem **122** and as previously indicated is in electrical signal communication with the SLIC **132.** With broadband communications established with the CO **100** and with the optional IPTV **144,** VoIP **146,** and WiFi **148** components the CPE/ST **134** is enabled to provide broadband internet access services, television subscription or pay-per-view services, VoIP services and wireless LAN services and capabilities.

VoIP service can be used as the primary telephony line service to a subscriber. Primary line means the telephone service will be available all the time, and may even be available during a significant power failure event. In the case where a subscriber suffers a power outage, then the CPE/ST **134** will require a battery or uninterruptible power source **150** to meet lifeline service requirements, according to an exemplary embodiment of the invention.

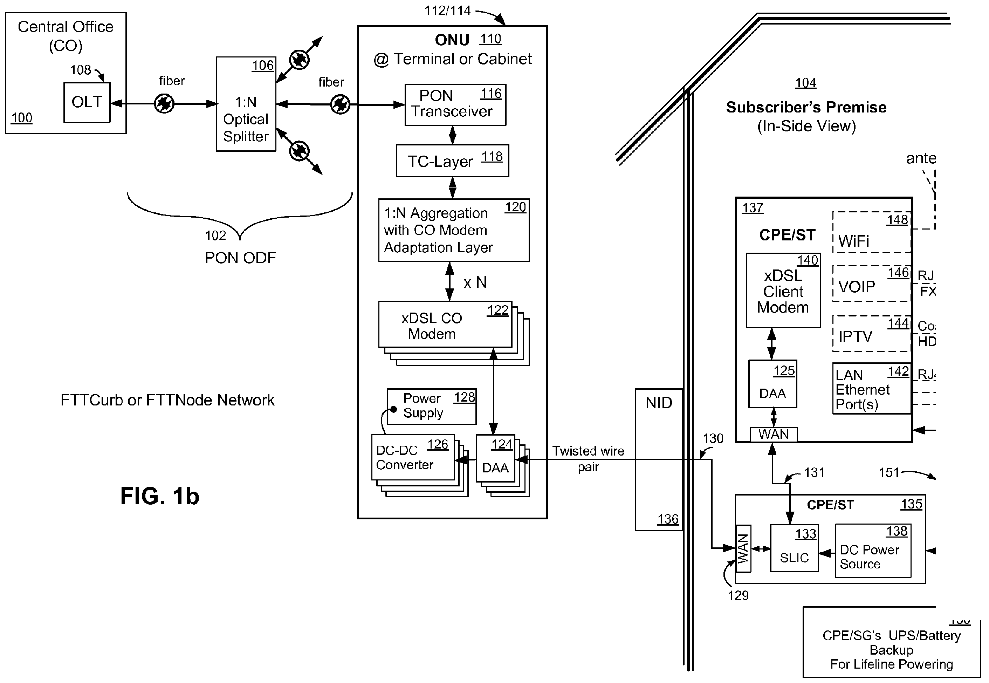

Referring to **FIG. 1b****,** an alternative embodiment of **FIG. 1a** is shown with CPE/ST **135** comprising SLIC **133** and DC Power source **138.** SLIC **133** operates similar to SLIC **132,** coupling DC power from DC power source **138** onto twisted cooper wire pair **130** with electrical signal communications from xDSL client modem **140** via twisted wire pair **131** onto subscriber-powered twisted wire pair **130.** SLIC **133** also decouples electrical signal communications from xDSL CO modem **122** on twisted wire pair **130** onto twisted wire pair **131.** CPE/ST **135** allows electrical modem signal communications to be exchanged between network element's CO modem **122** and CPE/ST **137** client modem **140** while coupling electrical power for use by network element ONU **110** on to twisted wire pair **130.** In the case where a subscriber suffers a power outage, then the CPE/ST **137** and CPE/ST **135** will require a battery or uninterruptible power source **150** to meet lifeline service requirements, not according to the invention.

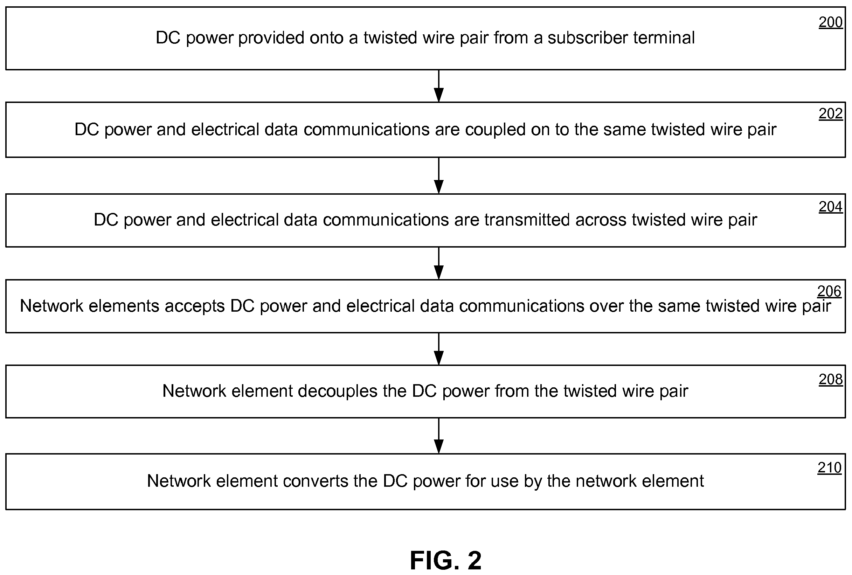

Referring to **FIG. 2** in view of **FIG. 1a****,** a flow chart of a method of an embodiment of the present invention is illustrated. Powering a network element of a fiber optic wide area network, such as on ONU **110** in **FIG. 1a****,** from a subscriber terminal **134** at a subscriber premise **104** entails providing or supplying a DC power (e.g., from DC power source **138)** onto a twisted wire pair **130** as described at block **200.** At block **202,** electrical data communications from a communication device or modem, as in a client modem **140,** are coupled to the same twisted wire pair **130** along with the DC power. At block **204,** the DC power and electrical data communications are transmitted, driven or sent as a combined electrical WAN signal though WAN port **129** across the twisted wire pair **130** from the subscriber terminal **134** to the network element, such as ONU **110.** At block **206,** the driven DC power and electrical data communications are accepted or received at the network element over the same twisted wire pair **130.** At block **208,** the network element decouples the electrical data communications from the DC power, or vice versa, with a DAA device **124.** At block **210,** the network element provides the DC power to a DC-to-DC power converter **126** for conversion and for use by the network element in the network element's power supply **128.** In the method described above, the power network and the information network become, and are, the same network. The DC power that is provided or supplied at the subscriber premise **104** for feeding the power need of the network element is assumed to be of sufficient DC current and DC voltage required for delivery to the network element. In many embodiments of the invention, this required DC current and DC voltage will be of a high level (e.g., -48 volts, -24 volts) that necessitates the use of a DC converter by the network element to convert the delivered DC power to a usable level (e.g., 5 volts, 3.3 volts) for use by the network element's component subsystems as distributed by the power supply **128** (e.g., 3.3 volts, 1.8 volts, or 0.9 volts).

In alternate embodiments not according to the invention, such as those providing primary telephony line services without the use of a traditional POTS line, an uninterruptible power source or battery backup **150** device may be required to continue to meet lifeline telephony regulatory obligations.

It will be appreciated that according to the method of an embodiment of the invention as described above, that with an increasing number of active subscribers the power needs of the network element, such as ONU **110,** increases and so does the amount of supplied DC power with each active subscriber. The method provides a solution to match increasing power demands with additional power supplied remotely from each active subscriber in a progressive manner.

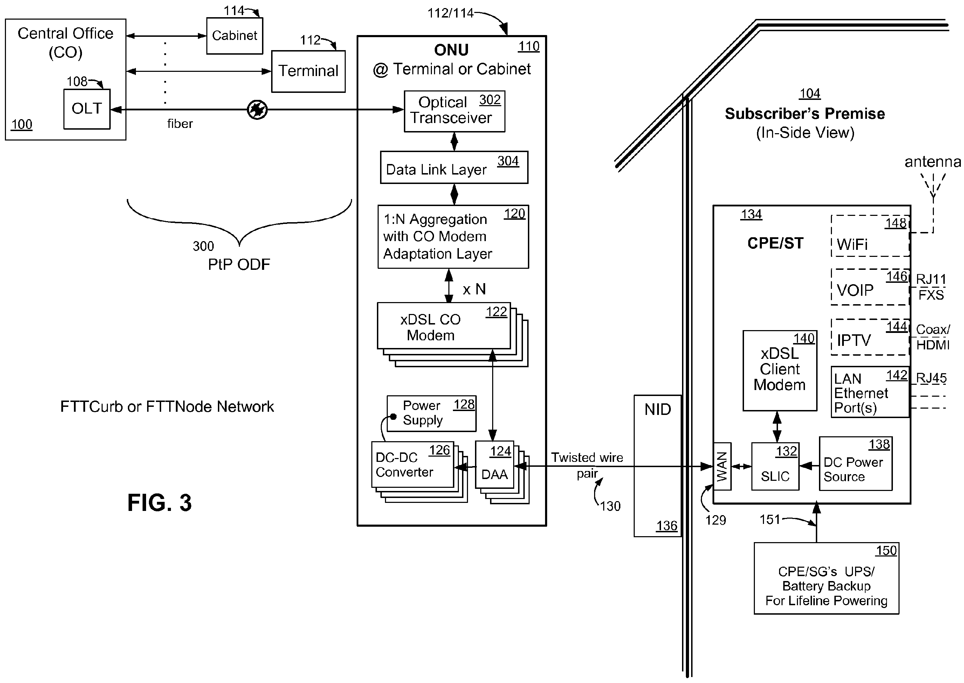

Referring to **FIG. 3** in view of **FIG. 1a****,** a FTTC or FTTN network is shown wherein the implementation of the network is a point-to-point (PtP) fiber optic wide area network. The ODF **300** lacks passive splitters and illustrates the one-to-one direct connection between terminals **112** and cabinets **114** and the CO **100.** Such PtP networks may be implemented by a point-to-point gigabit or 10 gigabit Ethernet network (e.g. active Ethernet communication network) with complementary components such as optical transceiver **302** and data link layer **304** in accordance with whatever specific protocol is chosen for the network implementation (e.g., Ethernet). The optical transceiver **302** may be plugged into or comprise an optical port or socket, the optical port serving as a site for coupling to a fiber and for performing the O/E and E/O conversions. Some embodiments of network elements not according to the invention may be made without optical transceivers, however having an optical port for later installation of an optical transceiver. In embodiments of network elements made with an optical transceiver, the optical port and the optical transceiver are essentially the same. Some form factors for optical transceiver **302** include, but not limited to, SFF, SFP, SFP+, and XFP. Additionally some embodiments may use dual fibers for communications with the CO, head-end or OLT. **FIG. 3** serves to show that the method of an embodiment of the invention as previously described, as in **FIG. 2****,** is a method apathetic and even naive of the design choice or implementation of the fiber in the loop network. The method works equally well for both PtP networks and PONs.

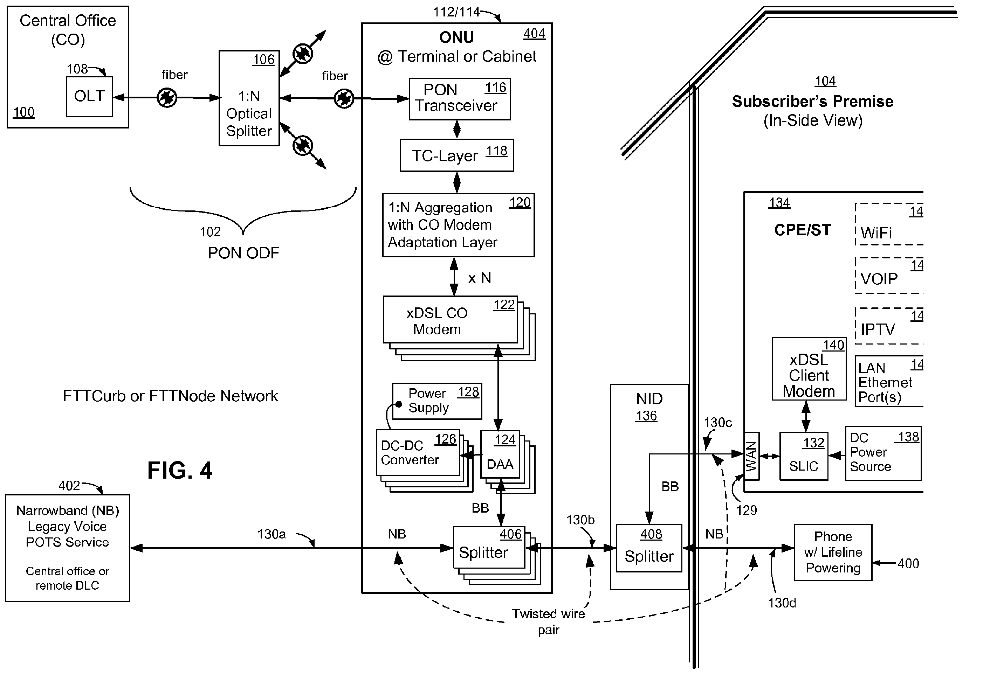

Referring to **FIG. 4** in view of **FIG. 1a****,** an alternative embodiment in accordance with the present invention is illustrated wherein the primary telephony line service **400** is served by legacy POTS from a CO or remote Digital Loop Carrier (DLC) network **402.** Traditionally, a CO or DLC **402** is the sole power source for legacy POTS lines; however in this embodiment the SLIC **132** provides the DC power to twisted wire pair **130b, 130c,** and **130d** transmission line. Twisted wire pair transmission line **130a** is connected to the CO or DLC **402** to a network element, such as ONU **404.** ONU **404** additionally comprises a splitter **406** that combines the POTS service with the electrical CO modem **122** communications together on the same twisted wire pair **130b** through an electrical port or socket (e.g., RJ-11). The splitter **406** places the POTS service at a lower and more narrow frequency (termed narrowband NB) than the xDSL modem communications which utilize higher frequencies to achieve greater bandwidth for data communications (termed broadband BB). In this embodiment a section of the twisted wire pair **130b** transmission line carries POTS (NB) signal, xDSL modem electrical communications (BB) and the DC power (both a DC current and a DC voltage). This section of twisted wire pair **130b** lies between and connects the ONU **404,** through a second electrical port or socket (e.g., RJ-11) to the NID **136** of a subscriber premise **104.** At the NID **136,** another splitter **408** filters or separates the POTS NB signal and the xDSL modem electrical communications BB providing the NB signal to connect the subscriber's primary telephone line service **400** and providing the BB signal to the SLIC **132.**

It will be appreciated that in this embodiment of the invention an uninterruptable power supply (UPS) or battery backup source is not required. If a subscriber suffers a power outage, the CPE/ST **134** will be without power and thus broadband communications will be down as well. This is tolerable since the outage will cause powered equipment such as TVs and the subscriber's LAN to be down as well. The CPE/ST **134** will not be able to provide DC power to the twisted wire pair. The CO or DLC **402** routinely monitors conditions on the twisted wire pair transmission line and sensing a loss of power on the line can provide the necessary DC power to continue providing POTS services such as primary telephony line service **400.**

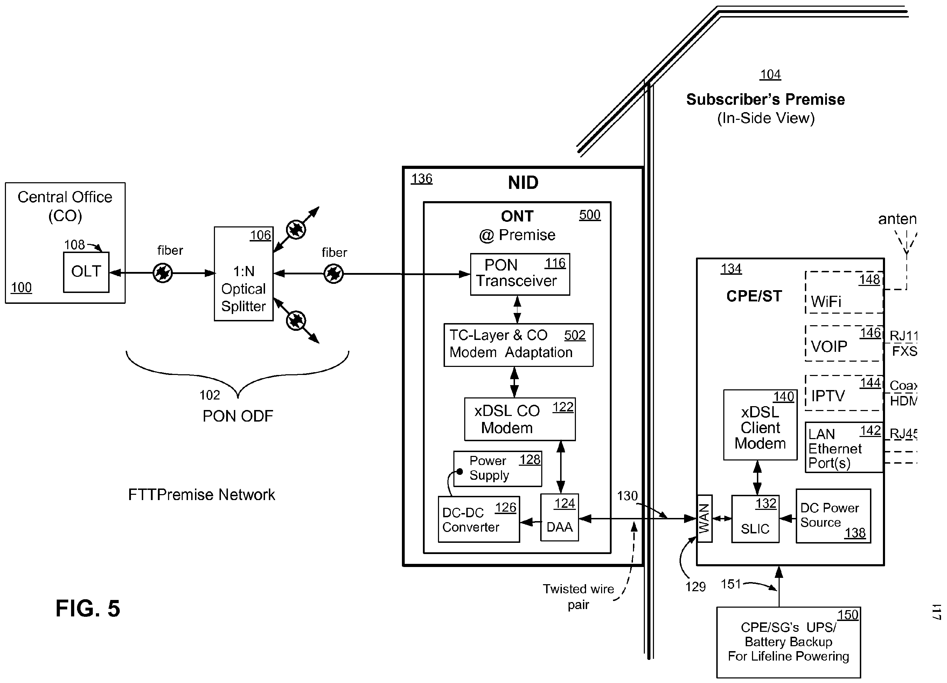

Referring to **FIG. 5** in view of **FIG. 1a****,** in which another alternative embodiment not according to the invention is illustrated wherein the fiber in the loop network is a FTTP or Fiber to the Home (FTTH) network and the subscriber-powered network element is an ONT **500** at or near the NID **136.** The ONT **500** does not support multiple subscriber premises thus aggregation methods are not necessary in the TC-Layer and CO modem adaptation device **502** and only a single DAA **124,** xDSL CO modem **122** and DC-to-DC converter **126** are required to perform a method not according to the invention. The FTTP or FTTH network illustrated in **FIG. 5** is a passive optical network (PON). If primary telephone service line is to be provided by the FTTP or FTTH network then a UPS/battery backup source **150** for the CPE/ST **134** may be required for life-line regulatory obligations.

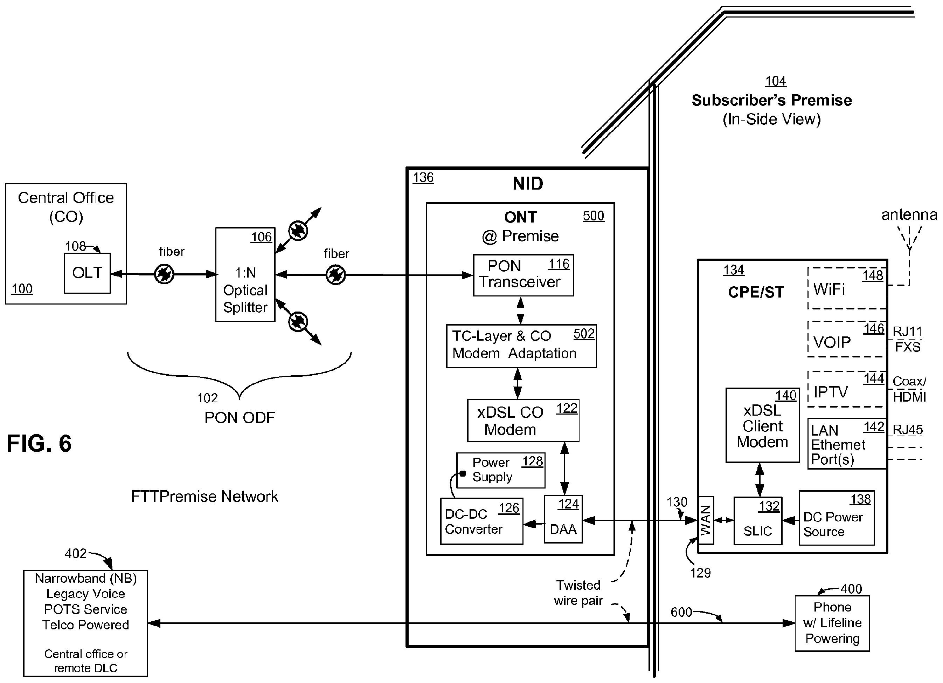

Referring to **FIG. 6** in view of **FIG. 5****,** in which yet another alternative embodiment not according to the present invention is illustrated wherein the FTTP or FTTH does not provide a primary telephone service line. In this embodiment the POTS services provided by a CO or DLC **402** pass through the NID **136** with no splitting and on a separate twisted wire pair **600** from the twisted wire pair **130** which provides broadband services to the subscriber premise **104** and provides subscriber power to the ONT **500** as previously described and indicated.

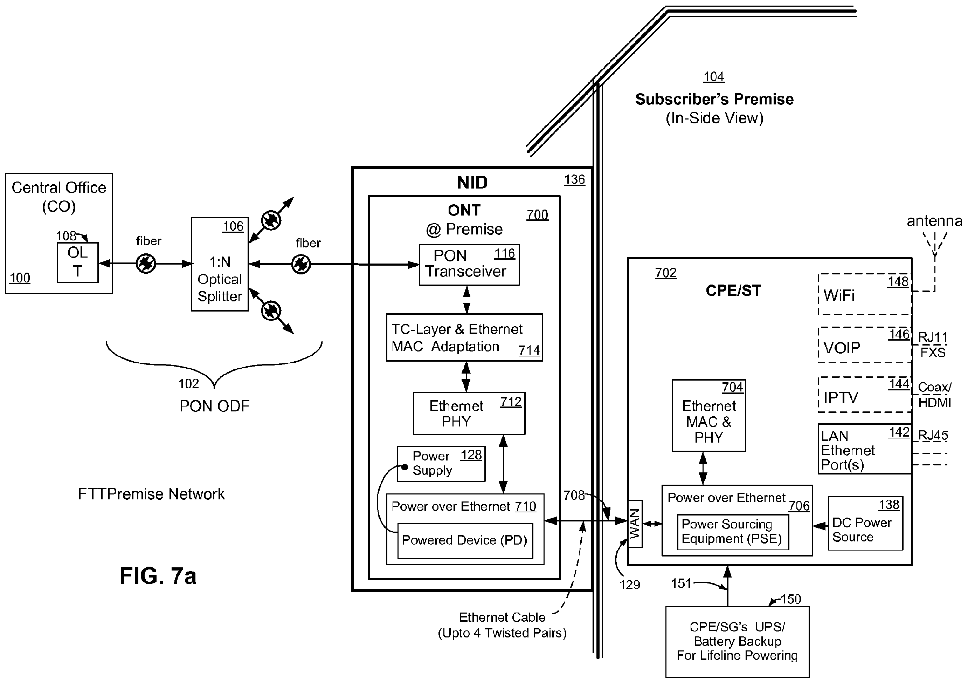

Referring to **FIG. 7a** in view of **FIG. 1a****,** an alternative embodiment in accordance with the present invention is illustrated wherein a FTTP or FTTH network is shown with a subscriber-powered ONT **700,** which is powered by Power over Ethernet (PoE). The FTTP or FTTH network shown being a passive optical network (PON) implementation. PoE is defined by the IEEE 802.af specification and defines a way to build Ethernet power-sourcing equipment and powered device terminals in local area networks (LANs). The specification involves delivering 48 volts of DC power over unshielded twisted-pair wiring in LANs. It works with existing LAN cable plant, including Category 3, 5, 5e or 6; horizontal and patch cables; patch-panels; outlets; and connecting hardware, without requiring modification.

A CPE/ST **702** comprising a communication device such as an Ethernet MAC and PHY **704** device is in electrical communication with a first Power over Ethernet (PoE) capable device **706.** The PoE capable device **706** internally comprises an electrical coupling device such as a Power Sourcing Equipment (PSE) device in accordance with the 802.3af standard. The PSE electrical coupling device couples electrical Ethernet signals and DC power, which may be derived from subscriber mains power, provided by DC power source **138.** The first PoE capable device **706** passes electrical Ethernet signals as well as DC power through WAN port **129** as a combined electrical WAN signal over Ethernet cable **708** to an electrical port or socket (e.g., RJ-45) at a second PoE capable device **710** in the ONT **700.** The ONT **700** being at or near the NID **136.** The second PoE capable device **710** comprises an electrical coupling device such as a Powered Device (PD) in accordance with the 802.3af standard. The second PoE capable device **710** is capable of decoupling the electrical Ethernet signals from the combined electrical WAN signal, which are then provided to a communication device such as the Ethernet PHY **712,** and decouples DC power which is then provided to the ONT **700** power supply **128.** The second PoE capable device **710** may contain a DC-to-DC converter to supply (not shown) the appropriate DC current and DC voltage needs of the ONT **700.** The communication device Ethernet PHY **712** is in electrical communication with a TC-Layer and Ethernet MAC adaptation device **714** to complete the broadband communication flow and to indicate the differences in ONT **700** over previous ONT **500.** The CPE/ST **702** is provided power during subscriber power outages by a UPS/battery backup **150** for lifeline powering requirements.

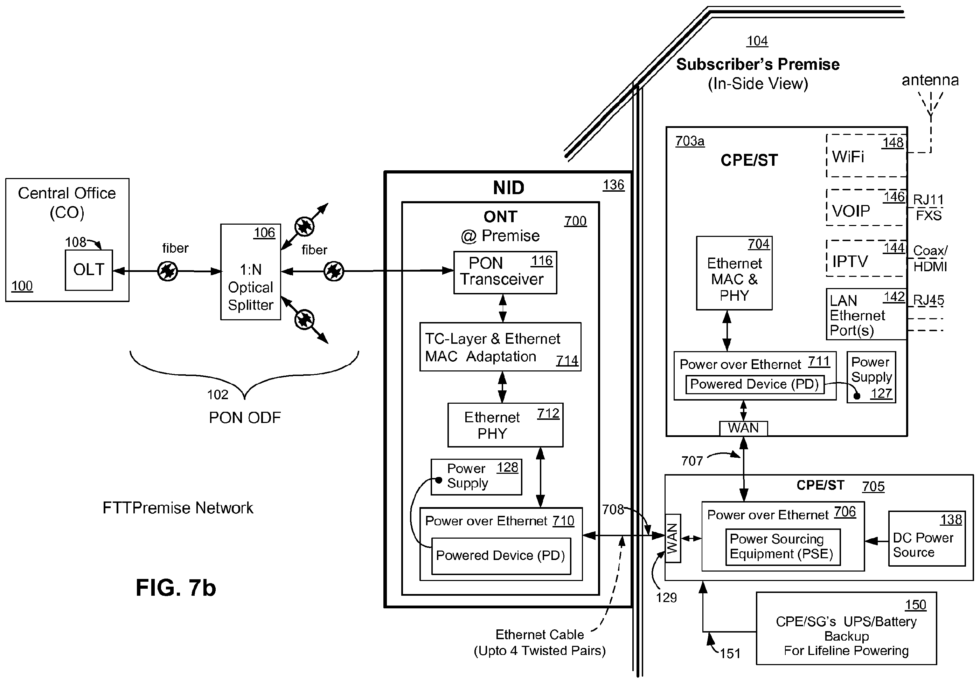

Referring to **FIG. 7b****,** an alternative embodiment of **FIG. 7a** is shown with a CPE/ST **705** comprising PoE capable device(s) **706** and DC power source **138.** The CPE/ST **705** passes electrical Ethernet signals between CPE/ST **703a** and ONT **700** via Ethernet cables **707** and **708** respectively as well as coupling DC power from the DC power source **138** onto **708** as a combined electrical WAN signal through WAN port **129.** CPE/ST **705** is provided power during subscriber power outages by the UPS/battery backup **150** for lifeline powering requirements.

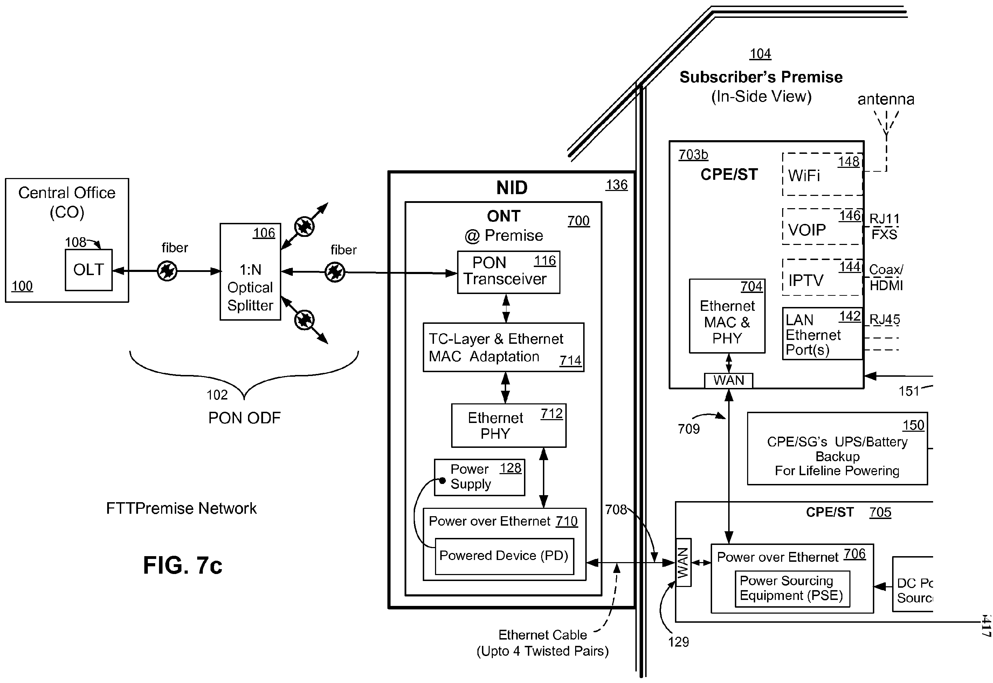

Referring to **FIG. 7c****,** an alternative embodiment of **FIG. 7b** is shown with a legacy CPE/ST **703b** that is not PoE capable. PoE capable device **706** passes electrical Ethernet signals from Ethernet MAC and PHY **704** via Ethernet cable **709** as well as DC power provided by DC power source **138** over Ethernet cable **708** as a combined electrical WAN signal through WAN port **129** to the second PoE capable device **710** in ONT **700.** The CPE/ST **703b** and CPE/ST **705** are provided power during subscriber power outages by the UPS/battery backup **150** for lifeline powering requirements.

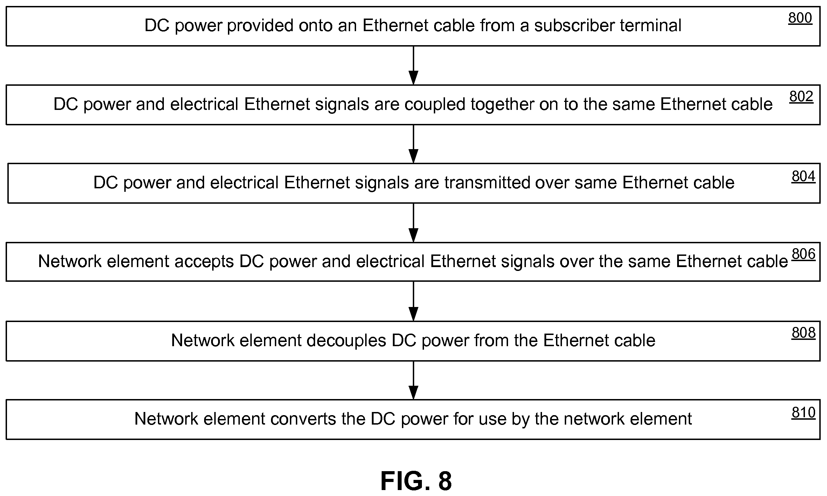

Referring to **FIG. 8** in view of **FIG. 7a****,** a flow chart of a method of an embodiment of the present invention utilizing PoE is illustrated. Powering a network element of a FTTP or FTTH network, such as ONT **700** in **FIG. 7a****,** from a subscriber terminal **702** or **705** at a subscriber premise **104** entails providing or supplying a DC power, from DC power source **138** to PSE **706,** onto a twisted wire pairs or Ethernet cable **708** from the subscriber terminal as indicated by block **800.** At block **802,** electrical Ethernet communications or signals from the Ethernet MAC and PHY device **704** are coupled to the same Ethernet cable **708** transmission line with the DC power. At block **804,** the DC power and electrical Ethernet signals are transmitted, driven or sent as a combined electrical WAN signal through WAN port **129** across the Ethernet cable **708** transmission lines from the subscriber terminal **702** or **705** to the network element, such as ONT **700.** At block **806,** the driven DC power and electrical Ethernet signals are accepted or received at the network element over the same Ethernet cable **708.** At block **808,** the network element decouples the electrical Ethernet signals from the DC power, or vice versa with the second PoE capable device **710.** At block **810,** the network element performs DC-to-DC power conversion for use by the network element.

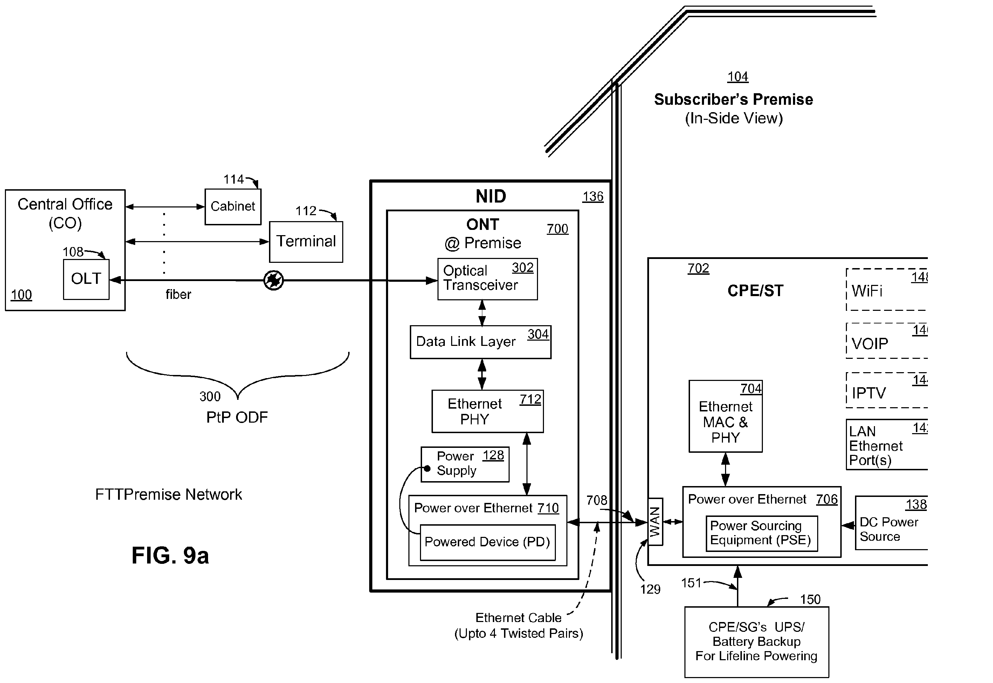

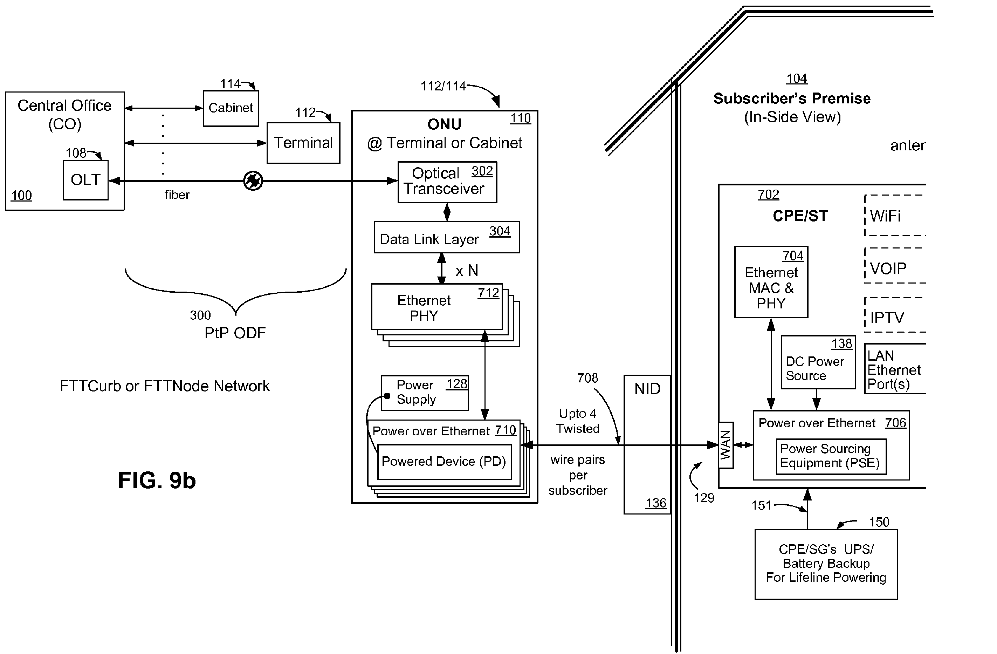

Referring to **FIG. 9a** and **FIG. 9b** in view of **FIG. 7a****,** a FTTP or FTTH network is shown wherein the implementation of the network is a point-to-point (PtP) fiber optic wide area network. The ODF **300** lacks passive splitters and illustrates the one-to-one direct connection between terminals **112,** cabinets **114,** NIDs **136** and the CO **100.** Such PtP networks may be implemented by a point-to-point gigabit or 10 gigabit Ethernet network (e.g. active Ethernet communication network) with complementary components such as optical transceiver **302** and data link layer **304** in accordance with whatever specific protocol is chosen for the network implementation (e.g, active Ethernet). The optical transceiver **302** may be plugged into or comprise an optical port or socket, the optical port serving as a site for coupling to a fiber and for performing the O/E and E/O conversions. Some embodiments of network elements not according to the invention may be made without optical transceivers, however having an optical port for later installation of an optical transceiver. In embodiments of network elements made with an optical transceiver, the optical port and the optical transceiver are essentially the same. Some form factors for optical transceiver **302** include, but not limited to, SFF, SFP, SFP+, and XFP. Additionally some embodiments may use dual fibers for communications with the CO, head-end or OLT. **FIG. 9a** and **FIG. 9b** serve to show that the PoE exemplary embodiment of the invention as previously described, as in **FIG. 8****,** is a method apathetic and even naive of the design choice or implementation of the fiber in the loop network. The method works equally well for both PtP networks and PONs.

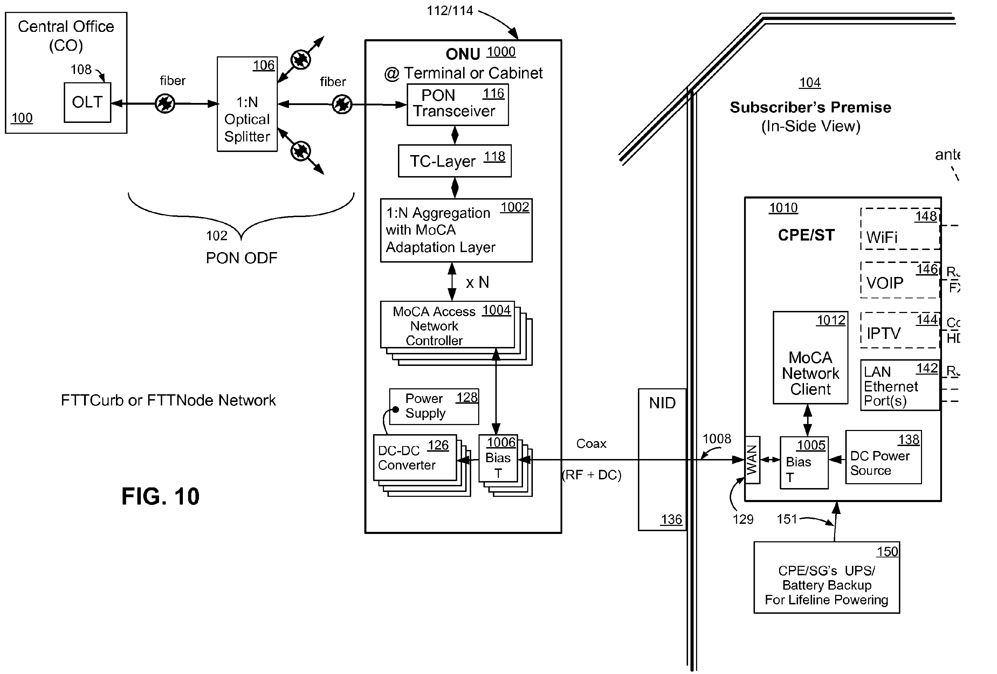

Referring now to **FIG. 10** in view of **FIG. 1a****,** an alternative embodiment in accordance with the present invention is illustrated wherein a FTTC or FTTN network is shown with a subscriber-powered ONU **1000,** which is in communication with a subscriber's terminal or CPE **1010** over a coaxial cable **1008** transmission line using communication devices such as Multimedia over Coax Alliance (MoCA) devices **1004/1012.** The FTTC or FTTN network shown being a passive optical network (PON) implementation. MoCA is an industry driven specification for delivering networking, high-speed data, digital video, and entertainment services through existing or new coaxial cables in homes.

A CPE/ST **1010** comprising a communication device such as MoCA network client **1012** device is in electrical communication with an electrical coupling device such as first bias T device **1005.** Bias T's are coaxial components that are used whenever a source of DC power is connected to a coaxial cable. The bias T does not affect the AC or RF transmission through the cable. The first bias T device **1005** couples MoCA electrical communication signals from MoCA Network Client **1012** with DC power from DC power source **138** as a combined electrical WAN signal though WAN port **129** and transmitted over coaxial cable **1008** through an electrical port (e.g., F-type or N-type connector) to another electrical coupling device such as second bias T device **1006** in the network element ONU **1000,** the ONU **1000** being located away from the NID **136** and may serves a plurality of subscribers. The second bias T device **1006** is capable of decoupling the MoCA electrical communication signals, which is provided to a second communication device such as the MoCA access network controller device **1004,** and decoupling DC power to the ONU **1000** DC-to-DC converter **126** from the combined electrical WAN signal on coaxial cable **1008.** The DC-to-DC converter **126** supplying the appropriate DC current and DC voltage regulation and to the power supply **128,** which distributes various voltage power-supply rails (e.g., 3.3 volts, 1.8 volts, or 0.9 volts) to ONU **1000**'s subsystem devices. The MoCA access network controller device **1004** is in electrical communication with a 1:N Aggregation with MoCA adaptation layer device **1002** that aggregates or multiplexes the broadband communication and service flows between the CO and subscribers. The CPE/ST **1010** is provided power during subscriber power outages by a UPS/battery backup **150** for lifeline powering requirements. In this way, a bias T device serves to inject and extract DC power to supply the powering needs of the ONU **1000** while combining MoCA signals on a same subscriber-powered coaxial cable **1008.**

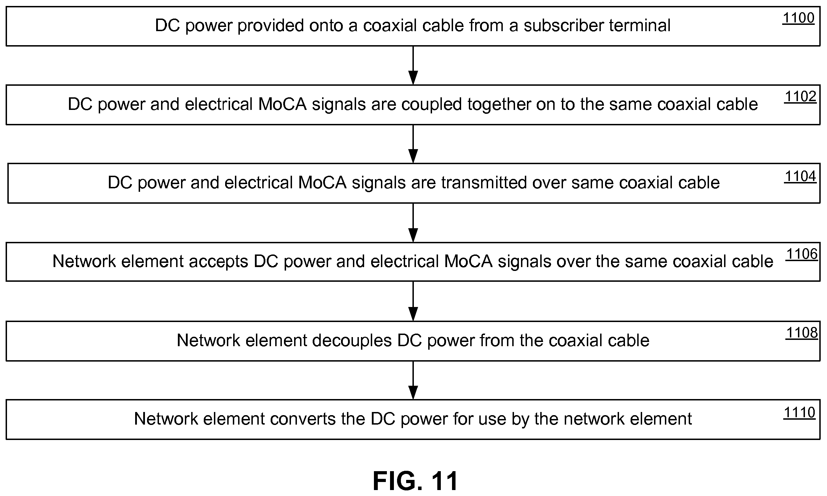

Referring to **FIG. 11** in view of **FIG. 10****,** a flow chart of a method of an embodiment of the present invention utilizing power over coax is illustrated. Powering a network element of a FTTC or FTTN network, such as ONU **1000** in **FIG. 10****,** from a subscriber terminal **1010** at a subscriber premise **104** entails providing or supplying a DC power, from DC power source **138** to bias T **1005,** onto a coaxial cable **1008** from the subscriber terminal as indicated by block **1100.** At block **1102,** electrical MoCA communications or signals from the MoCA network client device **1012** are coupled to the same coaxial cable **1008** with the DC power. At block **1104,** the DC power and electrical MoCA signals are transmitted, driven or sent as a combined electrical WAN signal though WAN port **129** across the coaxial cable **1008** from the subscriber terminal **1010** to the network element, such as ONU **1000.** At block **1106,** the driven DC power and electrical MoCA signals are accepted or received at the network element over the same coaxial cable **1008.** At block **1108,** the network element decouples the electrical MoCA signals from the DC power, or vice versa with the second bias T device **1006.** At block **1110,** the network element performs DC-to-DC power conversion on the supplied and decoupled DC power for use by the network element.

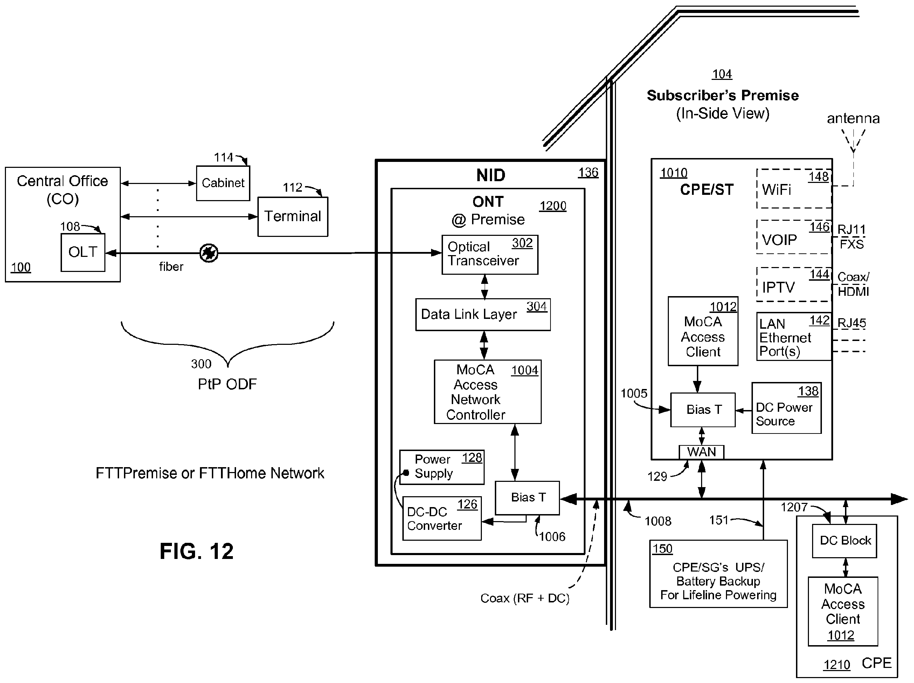

Referring to **FIG. 12** in view of **FIG. 10****,** an alternative embodiment not according to the present invention is illustrated wherein a FTTP or FTTH network is shown wherein the implementation of the network is a point-to-point (PtP) fiber optic wide area network. The ODF **300** lacks passive splitters and illustrates the one-to-one direct connection between terminals **112,** cabinets **114,** NIDs **136** and the CO **100.** Such PtP networks may be implemented by a point-to-point gigabit or 10 gigabit Ethernet network (e.g. active Ethernet communication network) with complementary components such as optical transceiver **302** and data link layer **304** in accordance with whatever specific protocol is chosen for the network implementation. The optical transceiver **302** may be plugged into or comprise an optical port or socket, the optical port serving as a site for coupling to a fiber and for performing the O/E and E/O conversions. Some embodiments of network elements not according to the invention may be made without optical transceivers, however having an optical port for later installation of an optical transceiver. In embodiments of network elements made with an optical transceiver, the optical port and the optical transceiver are essentially the same. Some form factors for optical transceiver **302** include, but not limited to, SFF, SFP, SFP+, and XFP. Additionally some embodiments may use dual fibers for communications with the CO, head-end or OLT. **FIG. 12** serves to show that the power over coax exemplary embodiment of the invention as previously described, as in **FIG. 10****,** is a method apathetic and even naive of the design choice or implementation of the fiber in the loop network. The method works equally well for both PtP networks and PONs. **FIG. 12** also serves to illustrate the power over coax method with an ONT **1200** as well as to show compatibility with other MoCA capable CPE devices **1210** that share network communications with the MoCA access network controller **1004** on the same coaxial cable **1008,** though such compatibility can be used with ONUs as well. **FIG. 12** also serves to illustrate the use of an optical transceiver **302** and data link layer **304,** in accordance with whatever specific protocol is chosen for the network implementation that does not need to perform 1:N aggregation or multiplexing of multiple MoCA connections. A DC block **1207** is used to isolate DC power while allowing data signals to pass through unaffected to allow use of other CPEs **1210** that do not provide DC power to the coaxial cable **1008.** The DC block **1207** may be internal to the CPE **1210** or external (not shown). The CPE/ST **1010** is provided power during subscriber power outages by a UPS/battery backup **150** for lifeline powering requirements.

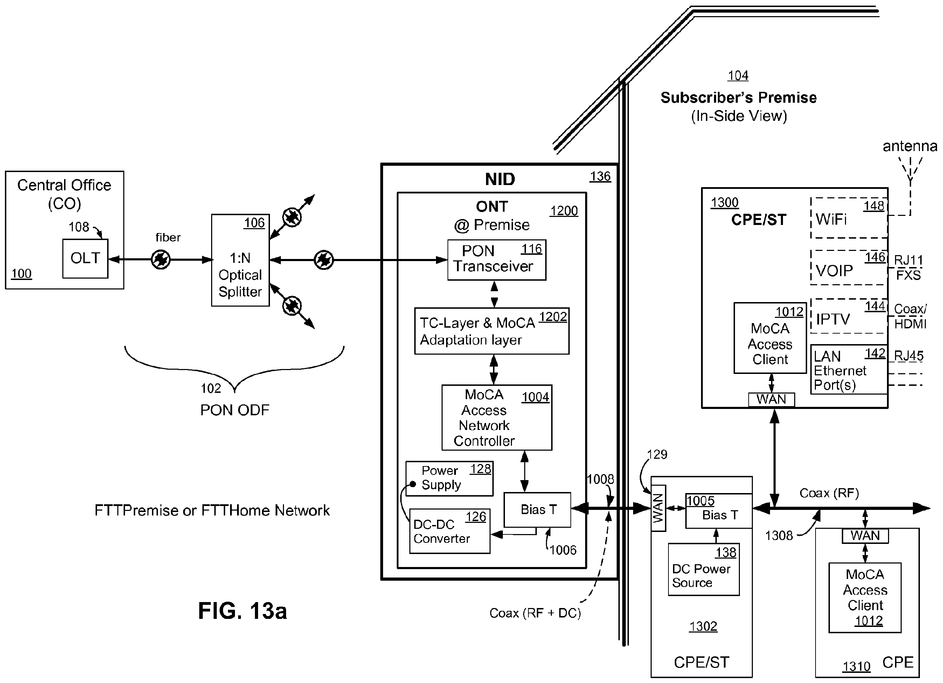

Referring to **FIG. 13a** in view of **FIG. 12****,** an alternative embodiment not according to the invention using a FTTP or FTTH network is shown wherein the implementation of the wide area network is a PON **102.** In this embodiment a CPE/ST **1302** comprising bias T **1005** and DC power source **138** is shown. The bias T **1005** of CPE/ST **1302** combines the MoCA or RF communications from coaxial cable **1308** onto coaxial cable **1008** transmission lines with DC power from the DC power source **138** as a combined electrical WAN signal though WAN port **129.** The bias T device **1006** is capable of decoupling the MoCA or RF communication signals, which are then provided to the MoCA or RF access network controller device **1004,** and decoupling DC power signal to the DC-to-DC converter **126** from coaxial cable **1008.** The DC-to-DC converter **126** supplying the appropriate DC current and DC voltage regulation to the power supply **128** to distribute power at different voltage rails (e.g., 3.3 volts, 1.8 volts, or 0.9 volts) throughout all the ONT **1200** subsystem devices. This allows simplification and use of legacy (i.e., nonsubscriber powered) CPE/ST devices **1300/1310** while providing subscriber-power from CPE/ST **1302** to the network element ONT **1200** over same coaxial cable **1008** used for communications.

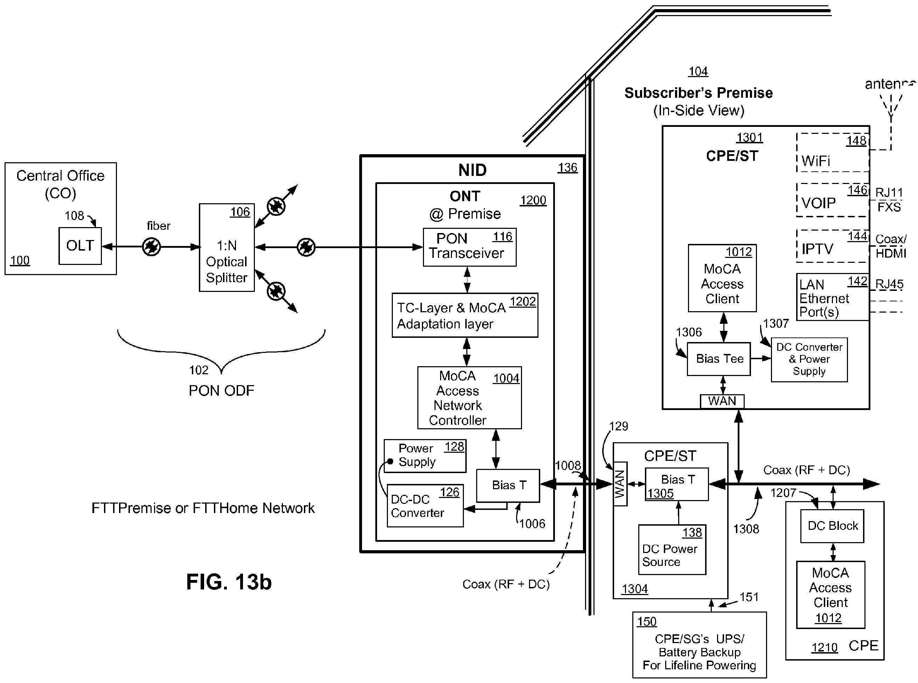

Referring to **FIG. 13b** in view of **FIG. 13a****,** an alternative embodiment not according to the invention using a FTTP or FTTH network is shown wherein the implementation of the wide area network is a PON **102.** In this embodiment a CPE/ST **1304** comprising bias T **1305** and DC power source **138** is shown and a UPS/battery backup source **150** for DC power source **138** is provided, which may be required for regulatory obligations. The bias T **1305** of CPE/ST **1304** combines the MoCA or RF communications from subscriber side coaxial cables **1308** and from network element side coaxial cable **1008** with DC power from the DC power source **138** and transmitted as a combined electrical signal on coaxial cables **1008** and **1308.** CPE/ST **1301** has a bias T **1306** that decouples MoCA or RF communications and DC power from coaxial cable **1308.** Bias T **1306** providing DC power to the CPE/ST **1301**'s power supply **1307** for distributing the appropriate voltage supply rails to all of CPE/ST **1301** electrical subsystems. The embodiment enables a CPE/ST, such as CPE/ST **1301,** and a network element, such as ONT **1200,** to be powered by a second CPE/ST, such as CPE/ST **1304,** within the customer premise via the same coaxial cable transmission line used for network communications, such as coaxial cable **1008** and **1308.**

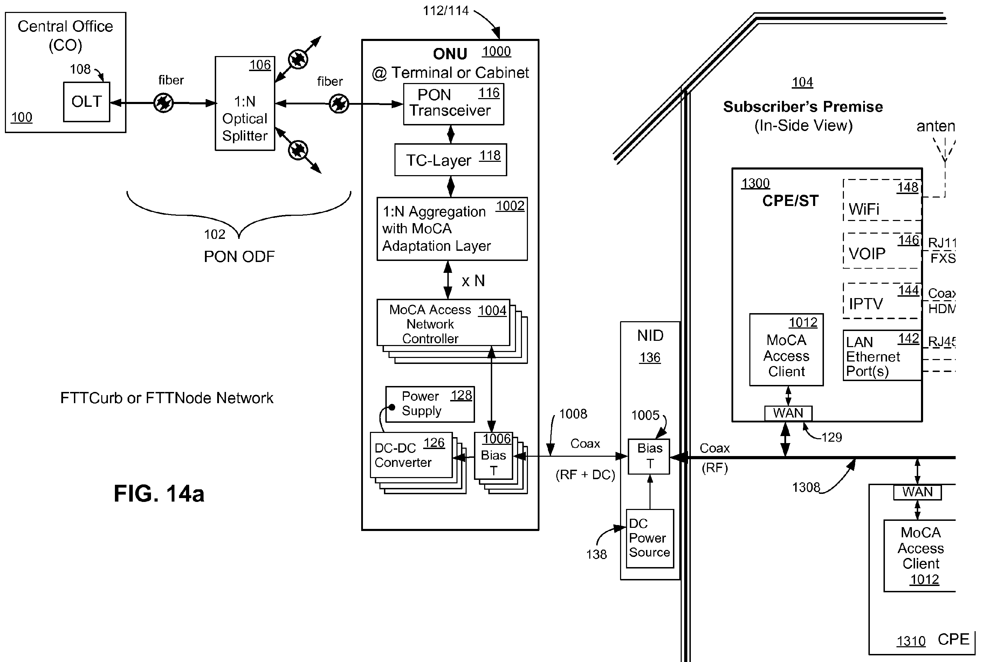

Referring to **FIG. 14a** in view of **FIG. 10****,** an alternative embodiment of the invention using a FTTC or FTTN network is shown wherein the implementation of the wide area network is a PON **102.** In this embodiment the bias T **1005** and DC power source **138** are external to the CPE/ST **1300** and are located at or near the NID **136.** The bias T **1005** combines MoCA or RF communications from subscriber side coaxial cable **1308** onto network element side coaxial cable **1008** with the DC power from the DC power source **138** as a combined electrical signal. This allows simplification of CPE/ST devices **1300/1310** and simplification of subscriber installation. Generally, power is not available at the NID **136**; however power at the NID may be available in future Greenfield land (i.e., undeveloped land as opposed to Brownfield land) installations and this embodiment allows a network element, such as ONU **1000,** to be powered from the NID with power derived from subscriber mains power via the same coaxial cable transmission line used for network communications, such as coaxial cable **1008** and **1308.**

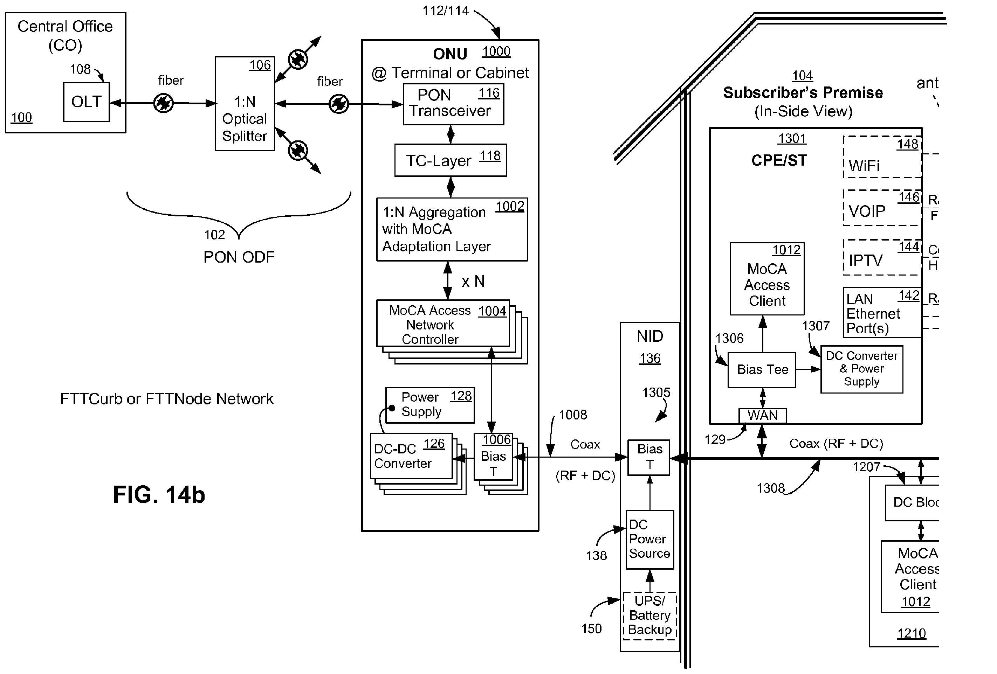

Referring to **FIG. 14b** in view of **FIG. 14a****,** an alternative embodiment of the invention using a FTTC or FTTN network is shown wherein the implementation of the wide area network is a PON **102.** In this embodiment the bias T **1305,** DC power source **138** and a UPS/battery backup source **150** are external to the CPE/ST **1301** and are located at or near the NID **136.** The bias T **1305** combines MoCA or RF communications from subscriber side coaxial cables **1308** and network element side coaxial cable **1008** with the DC power from the DC power source **138** as a combined electrical signal. This allows simplification of subscriber installation as well as access for maintenance of the UPS/battery backup source **150** providing power during electrical power blackout enabling lifeline services. Additionally, this embodiment enables a CPE/ST, such as CPE/ST **1301,** and a network element, such as ONU **1000,** to be powered from the NID with power derived from subscriber mains power via the same coaxial cable transmission line used for network communications, such as coaxial cable **1008** and **1308.**

In yet another alternative embodiment in accordance with the present invention, HomePNA is used as the communication method between an ONU/ONT and a plurality of subscriber terminal/CPEs. HomePNA is an industry standard for home networking solutions based on internationally recognized, open and interoperable standards that allow worldwide distribution of triple-play services, such as IPTV, voice and Internet data by leverage existing telephone wires (twisted wire pair) or coaxial cable transmission line. Thus, alternative embodiments of **FIGs. 1-4** according to the invention and alternative embodiments of FIGs. 5 and 6 not according to the invention are possible substituting xDSL devices with HomePNA capable devices for subscriber powering network elements over twisted wire pairs as well as **FIGs. 10****,** **11****,** **14a** **and** **14b** **according to the invention and** **FIGs 12****,** **13a** **and** **13b** not according to the invention with substitution of MoCA devices with HomePNA capable devices for subscriber powering network elements over coaxial cable.

In yet another alternative embodiment in accordance with the present invention, ITU's G.hn is used as the communication method between an ONU/ONT and a plurality of subscriber terminal/CPEs. G.hn is yet another industry standard for home networking solutions based on internationally recognized, open and interoperable standards that allow worldwide distribution of triple-play services, such as IPTV, voice and Internet data by leverage existing telephone wires (twisted wire pair) or coaxial cable transmission line. Thus, alternative embodiments of **FIGs. 1-4** according to the invention and alternative embodiments of FIGs. 5 and 6 not according to the invention are possible substituting xDSL devices with G.hn capable devices for subscriber powering network elements over twisted wire pair, and as well as **FIGs. 10****,** **11****,** **14a** **and** **14b** **according to the invention and** **FIGs 12****,** **13a** **and** **13b** not according to the invention with substitution of MoCA devices with G.hn capable devices for subscriber powering network elements over coaxial cable. A plurality of G.hn devices may be connected to the same subscriber-powered twisted wire pair **130** or subscriber-powered coaxial cable **1008.**

While DC power is the preferred method of delivering power from a subscriber's premise to a network element, AC power is also possible. Alternate embodiments of **FIGs. 1-6** and **FIGs. 10-14b** are possible with substitution of DC power with AC power. Alternate embodiments wherein elements such as: DC power source **138, 1307**; DC-DC converter **126**; DC block **1207;** UPS backup **150** and electrical coupling devices such as: SLIC **132**; DAA **124, 125**; and bias T **1005, 1006, 1305, 1306** are appropriately substituted or designed with AC power in mind are also possible.

While UPS/battery backup **150** in various embodiments of the present invention have been shown to be an external device. Alternate embodiments with the UPS/battery backup **150** internal to the CPE, communication and/or power-coupling device are possible (not shown). Alternate embodiments with the UPS/battery backup **150** may be combined with DC power source **138.** It will be appreciated by those skilled in the arts, that during lifeline powering events that network elements such as ONUs and ONTs and CPE/ST equipment may power down non-essential devices to extend the time that lifeline services can be provided. Such powering down events may also include reducing the line rates of communications.

It will be appreciated that in the various embodiments of the present invention the network elements such as ONU or ONT may have circuitry to measure their power usage (not shown). Additionally, alternative embodiments of the ONUs and ONTs with power measurement or metering circuitry may report their power usage back to the OLT or have their power meter or power measurement circuits reset, via the management or control channel with the OLT. Service Providers may use this information to reimburse subscribers for network element electricity usage and may reimburse government entities for related taxation regulations. In yet another alternative embodiment of the invention, an embodiment of a CPE or subscriber terminal may measure the amount of power supplied or injected over the transmission line between the subscriber terminal and the network element. The CPE or subscriber terminal may report the power supplied to the Service Provider or an affiliate via TR-069 or similar protocol.

It will be appreciated that while not shown, the subscriber terminal or CPE (e.g., CPE/ST shown in **FIG. 1a****,** **1b****, 3-7c, 9, 10, 13a-14b**) may be a set-top box or may be incorporated into a television set (e.g., HDTV display). For example, a set-top box or a television incorporating an embodiment of the invention may power a service provider network element which provides services such as telephony, internet access, broadcast video, interactive video communications, and on-demand video. The set-top box, HDMI adaptor or high definition television (HDTV) may utilize G.hn communications and may be a slave G.hn device served by the service provider's network element serving as the master G.hn device controlling one or more slave G.hn based set-top box, HDMI adaptor or HDTV device.

It will also be appreciated that embodiments of the invention have the advantage of reducing installation labor time and cost. A significant portion of the time taken to connect subscribers to the Service Provider's network is the time and labor involved in provisioning power to the network element (e.g., ONU, ONT) and obtaining government or regulatory permits when the location of the network element requires deployment of new power-main connections and power supplying equipment. Since embodiments of the invention use the communication medium used to provide services (e.g., internet access, voice over internet protocol, broadcast TV, video conferencing) to also provide electricity to the network element, additional time and labor to power the network element is saved. Furthermore, self installation by subscribers is possible assuming a Service Provider has established service access to the premise (e.g., fiber connection or copper drop from a fiber). Self installation by a subscriber may be made as simple as plugging power into a wall outlet from the Service Provider provided or Subscriber purchased subscriber terminal (e.g., CPE, set top box, HDTV) and connecting the subscriber terminal to a wall phone jack or coaxial cable outlet. The reduction in installation labor time and cost may be significantly more than the cost of the network element (e.g., ONT) and the subscriber terminal. Additionally, Subscribers and Service Providers benefit from the ease of installation associated with embodiments of the invention due to the reuse of existing premise wiring which may preclude the deployment of new subscriber-premise overlay wiring that may compromise, during installation, the integrity of the subscriber premise thermal insulation, natural gas lines, sewer lines and mains power lines.

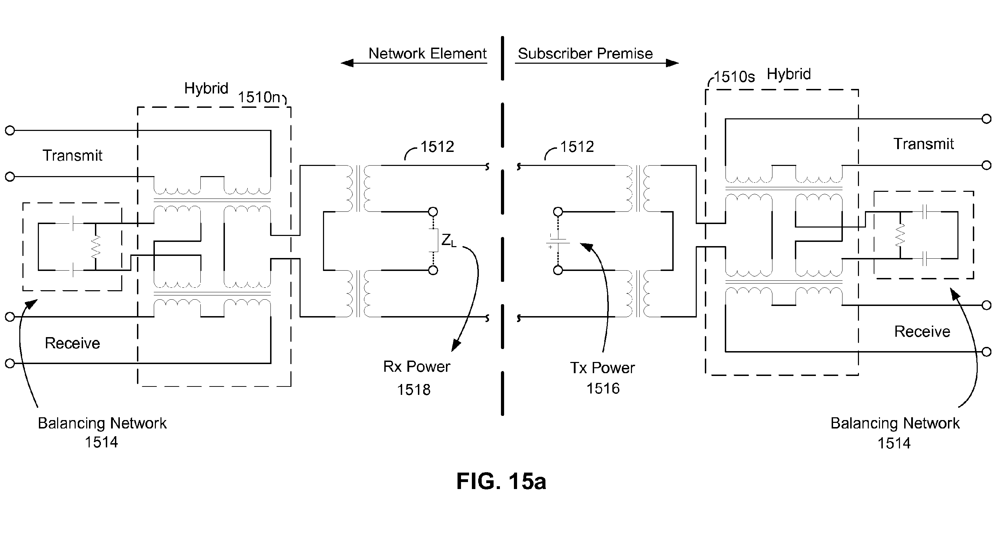

**FIG. 15a** is an exemplary illustration of a circuit model of an electrical coupling device for coupling data communications and electrical power between a subscriber terminal and a network element. The circuit model uses hybrid transformers **1510n, 1510s** to couple four-wires onto two-wire transmission lines for full duplex communications, wherein transmit and receive communication signals each comprise a pair of conductors (e.g., four wires total) as does the transmission line (i.e., two conductors) **1512** and communication signals pass through the transformers with minimal loss. The hybrid transformer **15010n, 1510s** blocks or cancels out transmit signals from appearing at the receive port as well as blocks or cancels out receive signals from appearing at the transmit port thus enabling full duplex communications. A balancing network **1514** is a circuit comprising of capacitance and resistance and sometimes inductance, forming a complex impedance network as transmission lines are not purely resistive but rather a complex impedance causing both the amplitude and phase to vary as signal frequencies vary. The electrical power signal is also injected onto **1516** and recovered **1518** from the transmission line **1512** via center-tapped transformers and Z_{L} is representative of the load of the network element. Equivalent circuits may be produced that, as previously mentioned, are transformer-based, optically-based, capacitively coupled-based, active silicon/integrated circuit-based (e.g., transistors, op-amps), or some combination thereof. Additional circuits or their equivalents for electrical protection and isolation (e.g., isolation transformer, low frequency blocking capacitors, common mode choke), AC-to-DC conversion (e.g., bridge rectifier, reservoir capacitor), transmit and receive signal filtering (e.g., capacitive, inductive and resistive elements) and device detection circuits to determine when a network element is attached or removed from the transmission line (e.g., methods utilizing a low level current) may also be included in embodiments of the invention. Additionally, modulators or mixers, low noise amplifiers and additional signal filters can be employed in embodiments to adjust the frequency of communication signals (e.g., xDSL, Ethernet, MoCA, G.hn) as well as the voltage and current characteristics over the frequency of the electrical power signal.

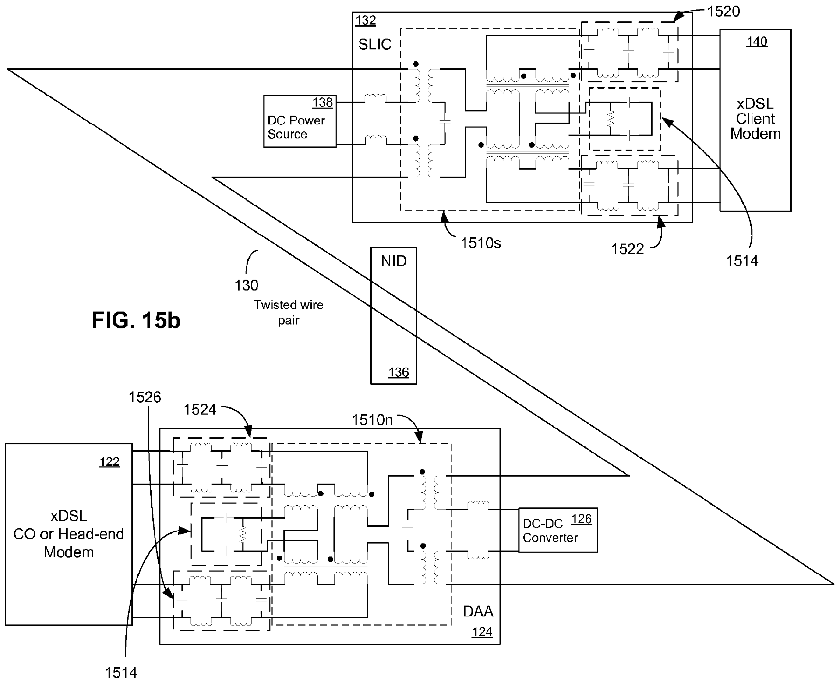

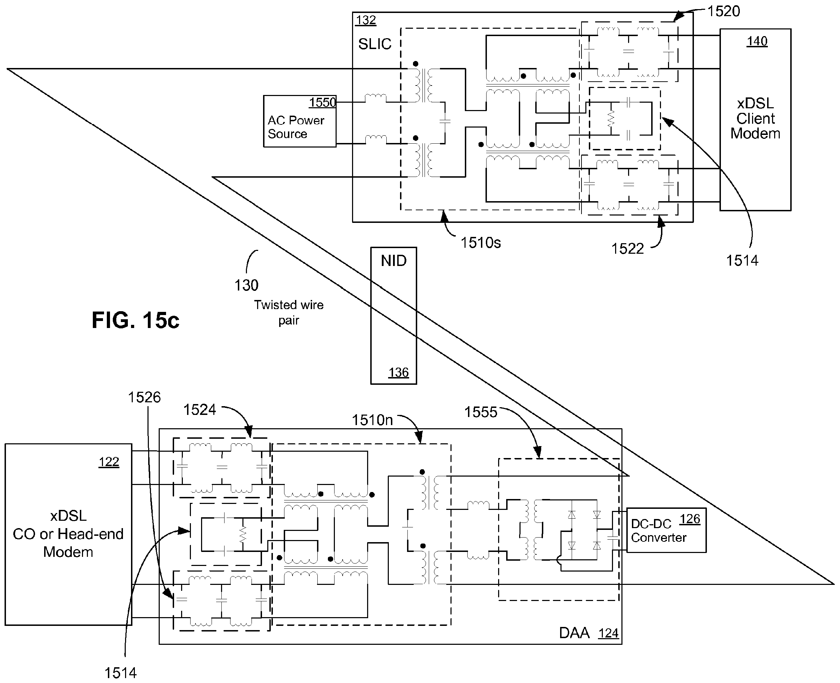

Referring now to **FIG. 15b** in view of **FIG. 15a** and **FIG. 1a****,** an exemplary illustration of a circuit model of an electrical coupling device for coupling data communications and DC electrical power between the subscriber terminal **104** and the network element ONU **110** of **FIG. 1a** is shown. xDSL client modem **140** is coupled to SLIC **132** comprising of transmit signal filter **1520,** receive signal filter **1522** and transmission line hybrid coupling circuit **1510s.** A DC power source **138** is coupled to SLIC **132** and SLIC **132** also couples to twisted wire pair **130.** xDSL CO or Head-end modem 122 is coupled to DAA **124** comprising of transmit signal filter **1524,** receive filter **1526** and transmission line hybrid coupling circuit **1510n.** DAA **124** decouples electrical power signal carried on twisted wire pair **130** and provides the decoupled electricity to DC-DC converter **126.** Referring now to **FIG. 15c****,** an embodiment similar to **FIG. 15b****,** however, incorporating AC power is shown. AC power supply **1550,** which may derive power from subscriber mains power, is coupled to SLIC **134** and a bridge rectifier and reservoir capacitor **1555** to regulate and convert AC power signal to a DC power signal which is then provided to DC-DC converter **126**

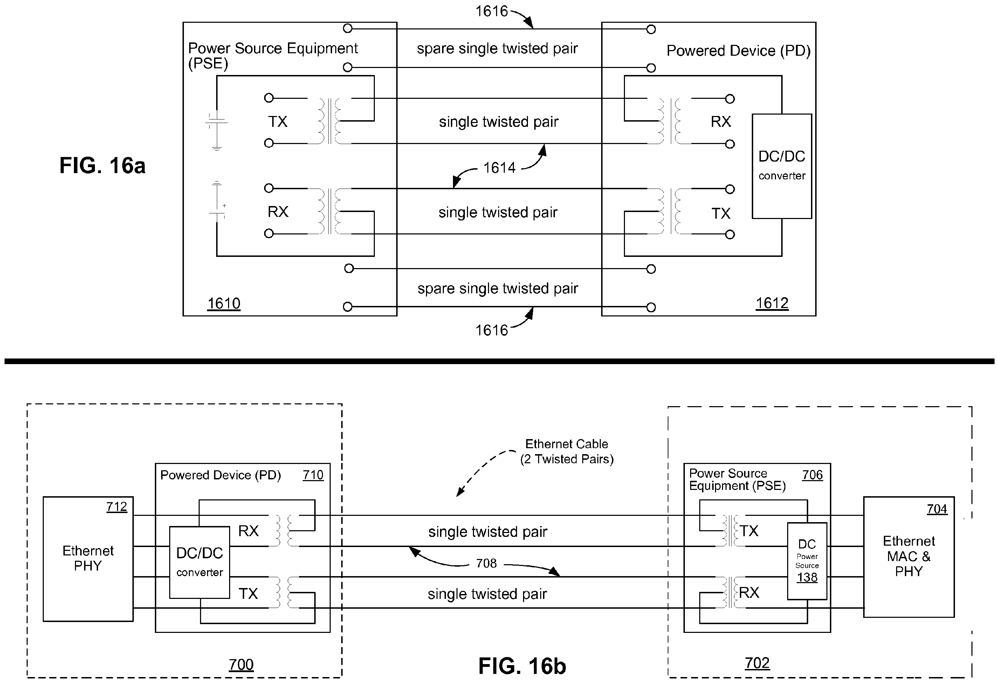

Referring now to **FIG. 16a****,** an exemplary illustration of a circuit model of an electrical coupling device for coupling Ethernet communications and DC electrical power is shown. An Ethernet power source equipment device (PSE) **1610** and an Ethernet powered device (PD) **1612** utilize center-tapped transformers on two pairs of conductors **1614** (e.g., two twisted wire pairs) to evenly transfer electricity from the PSE **1610** to PD **1612.** An alternative embodiment may utilize the spare twisted wire pairs **1616** instead of twisted wire pairs **1614.** Referring now to **FIG. 16b****,** an exemplary illustration of a circuit model for coupling Ethernet communications and DC electrical power between a subscriber terminal **702** and a network element (e.g., ONU) **700** in view of **FIG. 16a** and **FIG. 7a** is shown. Two pairs of conductors **708** are used to support fast Ethernet communications (i.e. 100 Mbit) and electrical power transfer between PSE **706** and PD **710.** Alternative embodiments may use four pairs of conductors to support gigabit Ethernet on CAT 5 cable or fast Ethernet over CAT 3 cable. It will be appreciated while embodiments of the invention employing Ethernet have been shown and referenced as using two or four pairs of conductors, as Ethernet is generally understood to be deployed and thus referenced as such to aid in teaching the invention, embodiments of the invention can use variants of Ethernet that use only a single twisted wire pair of conductors (i.e., one, two or four pairs or upto 4 twisted wire pairs can be used). However, xDSL (e.g, VDSL2) and G.hn technologies are preferred in embodiments using single twisted wire pairs given the maturity and robustness of xDSL and G.hn technology over the medium of single twisted wire pairs.

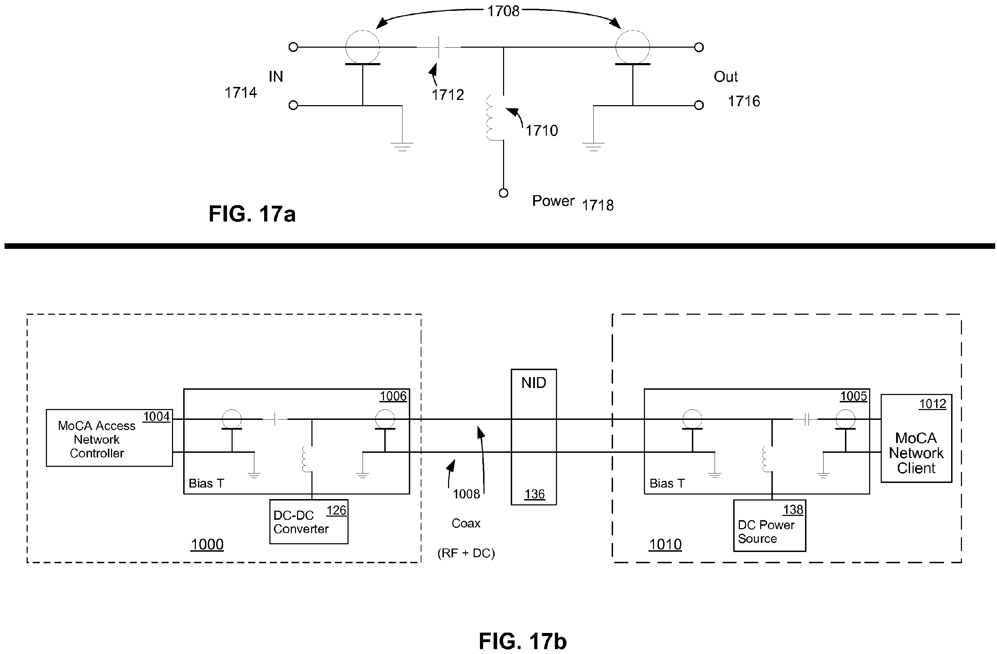

Referring now to **FIG. 17a****,** an exemplary illustration of a circuit model of an electrical coupling device for coupling data communications and DC electrical power is shown. An alternative method of combing data communications (e.g., DOCSIS, DOCSIS 2.0, DOCSIS 3.0, MoCA, MoCA 2.0 or G.hn modem) and electrical power on the same transmission medium, preferably coaxial cable, utilizes a bias T. A bias T for a coaxial cable **1708** comprises a feed inductor **1710,** capable of blocking high frequency signals (e.g., communication signals), and a blocking capacitor **1712,** capable of blocking low frequency signals (e.g., DC electrical power, low frequency AC electrical power). Data communications signals are passed through IN **1714** and OUT **1716** ports with only the blocking capacitor in series. The inductor **1710** prevents communications signals from passing through the Power **1718** port and the capacitor **1712** prevents DC power from leaving through the IN **1714** port. The OUT **1716** port comprises both the communication signal from the IN **1714** port and the DC power from the Power **1718** port. Additional circuits or their equivalents may be incorporated to decrease signal losses (e.g., utilizing bias T designs from waveguides or microstrips, additional inductors and capacitors to form resonant frequency circuits, and shunt capacitors) and protect from application of reverse voltage (e.g., an internal blocking diode).

Referring now to **FIG. 17b****,** an exemplary illustration of a circuit model of an electrical coupling device for coupling data communications and DC electrical power between a subscriber terminal **1010** and a network element (e.g., optical node, ONU) **1000** in view of **FIG. 17a** and **FIG. 10** is shown. A coaxial cable **1008** is used to support data communication and electrical power transfer between bias T **1005** and bias T **1006.** Blocking capacitors allow data communications to flow between MoCA client **1012** and MoCA controller **1004** while blocking electrical power. And blocking inductors allow electrical power flow between DC power source **138** and DC-DC converter **126** while blocking data communications. Additional circuitry to translate four-wires onto two-wire transmission lines for full duplex communication is not shown but assumed to be part of the communication devices or modem subsystems (e.g., MoCA client **1012,** MoCA controller **1004**). It will be appreciated that bias T **1305** of **FIG. 13b** and **FIG. 14b** does not comprise a blocking capacitor, such as **1712,** to allow DC or AC power to flow onto coaxial cables **1008** and **1308.**

As previously mentioned, device detection circuits to determine when a network element is attached or removed from the transmission line may also be included in embodiments of the invention. An exemplary detection circuit and process includes a resistive element or resistive load (e.g. 10 - 35 kΩ resistor) at the network element placed between powered conductors of the transmission line. In alternative embodiments the resistive load may vary as a function of phase or frequency of a voltage or current. A subscriber terminal senses the resistance between powered conductors through an applied low level current before applying additional voltage and current. Additionally, a network element may vary the resistance seen by the subscriber terminal in a predetermined manner and thereby indicate to the subscriber terminal the power requirements of the network element. Furthermore, a subscriber terminal may monitor the applied power at predetermined intervals (e.g., 50 ms) for power drops indicating that the network element has been disconnected or a problem with the transmission line. Power drops lasting longer than a second predetermined interval (e.g., 400 ms) will trigger the subscriber terminal to cease applying electrical power to the transmission line(s) until the subscriber terminal senses (e.g., again through a low level current) the predetermined resistive element of the network element once more. In an alternative embodiment wherein there are multiple subscriber terminals sharing the communication transmission line to the network element, after a first subscriber terminal has sensed the network element and provided electrical power to the network element subsequent subscriber terminals that couple to the communication transmission line can sense the presence of electrical power already on the transmission line and not provide additional power. In yet another alternative embodiment, a subscriber terminal can be powered over a shared communication transmission line from another subscriber terminal.

It will be appreciated that embodiments of subscriber terminals or network elements may incorporate a large capacitor or small battery that can power the subscriber terminal or network element to support sending a Dying Gasp message. A Dying Gasp message or signal is sent by the subscriber terminal or network element to the head-end or CO letting the head-end or CO (e.g., an OLT) know that a subscriber terminal (Dying Gasp message relayed by the network element for the subscriber terminal) or network element has lost electrical power and is about to go offline. This saves a service provider time by alerting them to what has caused the connection failure. It will be appreciated that the large capacitor or small battery can be part of the power supply of the subscriber terminal or network element or the capacitors of the power supply (i.e., power supply reserves) can be used to support sending a Dying Gasp message. It will be appreciated that the large capacitor, small battery or power supply reserves in some embodiments can power the subscriber terminal or network element to send the Dying Gasp message for 50 ms or sending the Dying Gasp message multiple times. Additionally, parts or subcomponents of the subscriber terminal or network element can be turned off when sensing power loss and the minimum number of subcomponents and network interfaces to support sending the Dying Gasp message maintained with power from the large capacitor, small battery or power supply reserves. Additionally the Dying Gasp message can be a bit indicator in the overhead section of a message frame used for network communications. Furthermore, the Dying Gasp message or signal can be sent between the subscriber terminal and the network element as well.

It will be appreciated that embodiments of the subscriber terminal or network element can incorporate power status indicators (e.g., LED power status indicators that blink or change color). For example status indicators at the subscriber terminal can indicate whether the subscriber terminal is ready to supply electrical power to the network element or if the subscriber terminal is providing electrical power to network element or if the subscriber terminal has received a Dying Gasp message from the network element. The network element status indicators can indicate whether the network element is receiving electrical power from the subscriber terminal or if the network element is running on battery reserves or if the network element has received a Dying Gasp message from the subscriber terminal (network terminal is running on battery reserves). It will be appreciated there can also be communication status indicators at embodiments of the subscriber terminal or network element to indicate whether or not communication has been established or is taking place (e.g., blinking) between the subscriber terminal and the network element. It will be appreciated that the CO can monitor the power status (e.g., power ready, steady state, on battery reserves) of network elements and subscriber terminals through network administration or management messages or network system alarms.

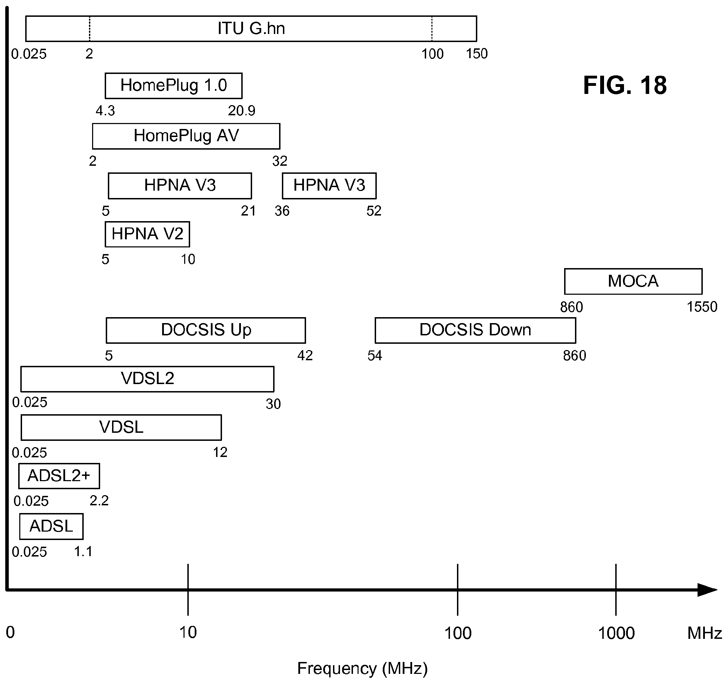

Referring now to **FIG. 18****,** an exemplary illustration of the frequency spectrum used by various communication protocols is shown. While not complete with all possible communication protocols nor drawn to scale, **FIG. 18** serves to illustrate that communication protocols have defined frequency distributions and that the methods of embodiments of the invention for combining an electrical power signal or electricity and electrical data communication signals on the same communication medium as a combined electrical signal are methods that are apathetic and even naive of the design choice or implementation of the data communication signals used between the network element and the subscriber. Communication devices compatible or compliant with communication protocols such as but not limited to: ADSL ANSI T1.413, ITU-T G.992.1 (G.DMT), ITU-T G.992.2 (G.lite); ADSL2 ITU-T G.992.3/4,; ADLS2+ ITU-T G.992.5; VDSL ITU-T G.993.1; VDSL2 ITU-T G.993.2; DOCSIS 1.0, ITU-T J.112 (1998); DOCSIS 1.1, ITU-T J.112(2001); DOCSIS 2.0, ITU-T J.122; DOCSIS 3.0, ITU-T J.222, ITU-T J.222.0, ITU-T J.220.1, ITU-T J.222.2, ITU-T J.222.3; HomePNA (HPNA) 2.0, ITU-T G.9951, ITU-T G.9952, ITU-T G.9953; HomePNA (HPNA) 3.0, ITU-T G.9954 (02/05); HomePNA (HPNA) 3.1, ITU-T G.9954 (01/07); HomePlug 1.0, TIA-1113; HomePlug AV, HomePlug AV2, IEEE P1901; Multimedia over Coax Alliance (MoCA) 1.0, MoCA 1.1, MoCA 2.0, www.mocalliance.org; G.hn, ITU-T G.9960, ITU-T G.9961; and G.hnta, ITU-T G.9970 are congruent with methods and embodiments of the invention.

Preferred embodiments of the invention supply electrical power from the subscriber premise to the network element on the same communication medium on a frequency separate (preferably at a lower frequency) from the frequency of the network communication signals used between the network element and the subscriber premise. For example, using VDSL2 to communicate data between a network element (e.g. ONT/ONU) and a subscriber premise over a twisted wire pair transmission line while remotely powering the network element from the subscriber premise can be accomplished by transmitting DC power (i.e., essentially at zero frequency), AC power at 60 Hz or a DC power signal or AC power signal centered at some frequency other than that used by VDSL2 since VDSL2 occupies frequencies between 25.8 KHz and 30 MHz. In another example, using MoCA to communicate between a network element and a subscriber premise over a coaxial cable while remotely powering the network element can be accomplished by transmitting DC power, AC power at 60 Hz or a DC power signal or AC power signal centered at some frequency other than that used by MoCA since MoCA occupies frequencies between 860 MHz and 1.55 GHz. In yet another example, using ITU-T G.hn to communicate between a network element and a subscriber premise over either a twisted wire pair or coaxial cable transmission line while remotely powering the network element can be accomplished by transmitting a DC power, AC power at 60 Hz or a DC power signal or AC power signal centered at some frequency other than that used by ITU-T G.hn since ITU-T G.hn occupies frequencies between 25.8 KHz and 100MHz-150 MHz range or bands (depending on speed mode of G.hn network).

Alternatively, while not preferred, embodiments of the invention transmitting power remotely from the subscriber premise to the network element on a frequency occupied, at least in part, by the communication signals used to communicate between the network element and the subscriber premise are envisioned to be possible. The transmitted electrical power would raise the noise power in the communication protocol's frequency spectrum, however as long as the communication signals are transmitted at power levels greater than the raised noise power, communications between the network element and the subscriber premise are still be possible. For example, modern xDSL (e.g., adsl, adsl2, vdsl, vdsl2) modems or G.hn modems measure the noise power spectrum encountered on their transmission lines dynamically or constantly. This information is used to determine the power level of their communication signal transmissions. Therefore, the rise in noise power from remotely transmitting electrical power from the subscriber premise to supply the network element at a frequency that overlaps with the communication frequencies may be compensated by the xDSL modems raising their communication signal transmission levels. However, modems with communication signal power levels beyond conventional signal power levels may be needed. Additionally, the subscriber premise xDSL or G.hn modem should observe the power spectral density or make a spectral density estimation of the twisted wire pair transmission line before any transmission, which can then be used to determine the power levels to supply power and data signals to the network element.

It will be appreciated that while embodiments of the invention have been shown or referenced employing different methods of injecting electrical power to the network element at different locations, any method or combination of injection methods and locations can be employed and injecting electrical power to supply the network element from the subscriber electrical power mains can occur anywhere along the communication transmission line between the subscriber terminal and the network element.

It will be appreciated that embodiments of subscriber terminals not according to the invention and network elements according to the invention can employ power saving modes and that electrically powering the network element from subscriber mains power over the same medium used for communication as previously described in embodiments of the invention do not prohibit using power saving modes.

It will be appreciated that while progressively powering a network element (e.g., an ONU) has previously been discussed, an embodiment of a network element can employ electrical power load balancing among subscriber terminals that are supplying the network element with electrical power. Additionally, in an alternative embodiment, network administration or management messages can be exchanged between subscriber terminals and network elements wherein subscriber terminals adjust the voltage or current of their electrical power signal supplying the network element responsive to a network message received from the network element or from the CO.

The embodiments were chosen and described in order to best explain the principles of the invention and its practical application, to thereby enable others skilled in the art to best utilize the invention. Accordingly, it is to be understood that the drawings and descriptions herein are proffered by way of example to facilitate comprehension of the invention. The invention is defined by the enclosed independent claims.

## Claims

1. A method for electrically powering a network element (110, 404, 500, 700, 1000, 1200) of a wide area network (WAN) by a first subscriber terminal (134, 137, 702, 1010, 135, 705, 1302), the method comprising:
at the network element:
applying a first predetermined resistive load to a first electrical port of the network element for the purpose of being detectable by the first subscriber terminal using a first low-level detection current;
receiving a first electrical power through the first electrical port of the network element responsive to applying the first predetermined resistive load, and wherein the first electrical power has additional current and/or voltage than the first low-level detection current;
converting the first electrical power for use by the network element;
receiving optical data communications though an optical port of the network element;
converting the optical data communications to electrical service provider data communications;
de-aggregating the electrical service provider data communications to one or more subscriber data communications; and
transmitting at least one of the one or more subscriber data communications to the first subscriber terminal though the first electrical port.

2. The method of claim 1, wherein the first predetermined resistive load is selected to convey the power requirements of the network element.

3. The method of claim 2, wherein the network element includes a detection circuit for applying the first predetermined resistive load, wherein the detection circuit includes the first predetermined resistive load placed between powered conductors of a transmission line (130, 1008).

4. The method of any one of claims 1 to 3, further comprising of sending a first Dying Gasp message or signal through the optical port of the network element responsive to loss of receiving the first electrical power through the first electrical port.

5. The method of claim 4, further comprising of sending a second Dying Gasp message or signal through the first electrical port of the network element responsive to loss of receiving the first electrical power through the first electrical port.

6. The method of any one of claims 1 to 5, further comprising:
measuring the amount of electrical power used by the network element; and
conveying the measured amount of electrical power used by the network element using a network message by transmitting the network message through the optical port.

7. The method of any one of claims 1 to 6, wherein the first electrical power is a DC electrical power.

8. The method of any one of claims 1 to 7, further comprising:
transmitting a signal or a network message to the first subscriber terminal through the first electrical port wherein the signal or network message requests the first subscriber terminal to adjust the current and/or voltage of the first electrical power.

9. A system for powering a network element of a fiber optic wide area network, the system comprising a network element (110, 404, 500, 700, 1000, 1200), at least one subscriber terminal (134, 137, 702, 1010, 135, 705, 1302), at least one electrical wire pair or cable (130, 1008) and at least one optical fiber, wherein the network element comprises:
at least one optical port wherein each optical port is configured to couple to the at least one optical fiber and wherein each optical port is disposed to include at least one optical transceiver;
at least one electrical port configured for coupling to the at least one electrical wire pair or cable (130, 1008) for communicating with the at least one subscriber terminal (134, 137, 702, 1010, 135, 705, 1302);
at least one first electrical coupling device (124, 710, 1006) electrically coupled to the at least one electrical port and configured to support detection of the network element by the at least one subscriber terminal through application of a predetermined resistive load for the purpose of being detectable by the at least one subscriber terminal using a low-level detection current across the at least one electrical wire pair or cable (130, 1008), and wherein the at least one first electrical coupling device is adapted to pass an electrical power having additional current and/or voltage than the low-level detection current received through the at least one electrical port to an at least one power converter responsive to application of the predetermined resistive load, and wherein the at least one first electrical coupling device is adapted to convey communications through the at least one electrical port;
at least one of a first communication device (122, 712, 1004) electrically coupled to the at least one first electrical coupling device for communicating with the at least one subscriber terminal (134, 137, 702, 1010, 135, 705, 1302);
a second communication device (118, 120, 304, 502, 714, 1002, 1202) electrically coupled to the at least one of a first communication device and electrically coupled to the at least one optical port, and wherein the second communication device is for optical communication through the at least one optical port; and
at least one power converter (126, 128) electrically coupled to the at least one first electrical coupling device for converting the electrical power for use by the network element, whereby
the network element is powered by the at least one subscriber terminal (134, 137, 702, 1010, 135, 705, 1302);
and wherein the at least one subscriber terminal (134, 137, 702, 1010, 135, 705, 1302) is configured to detect the resistive load using the low-level detection current, and to provide the electrical power having additional current and/or voltage than the low-level detection current to the network element, the at least one subscriber terminal comprising:
a power source (138) for producing an electrical power signal having a current and a voltage;
a second electrical coupling device (132, 133); and
a third communication device (140, 704, 712, 1004, 1012).

10. The system of claim 9, wherein the network element is configured to send a Dying Gasp message or signal through the at least one electrical port responsive to loss of the electrical power.

11. The system of claim 9 or 10, wherein the at least one first electrical coupling device includes a detection circuit for applying the predetermined resistive load, wherein the detection circuit includes the first predetermined resistive load placed between powered conductors of a transmission line (130, 1008), the transmission line being the at least one electrical wire pair or cable.

12. The system of any one of claims 9 to 11, wherein the network element (110, 404, 500, 700, 1000, 1200) is configured to measure the amount of the electrical power used by the network element, and wherein the network element is configured to convey the measured amount of the electrical power using a network message transmitted through the at least one optical port.

13. The system of any one of claims 9 to 12, wherein the network element (110, 404, 500, 700, 1000, 1200) is configured to load balance electrical power used by the network element among two or more electrical powers passed by two or more of the at least one first electrical coupling devices.

14. The system of any one of claims 9 to 13, wherein the network element (110, 404, 500, 700, 1000, 1200) is configured to send a Dying Gasp message or signal through the at least one optical port responsive to loss of the electrical power.

## Patentansprüche

1. Verfahren zur elektrischen Stromversorgung eines Netzwerkelements (110, 404, 500, 700, 1000, 1200) eines Weitverkehrsnetzwerks (WAN) durch ein erstes Teilnehmerendgerät (134, 137, 702, 1010, 135, 705, 1302), wobei das Verfahren umfasst:
am Netzwerkelement:
Anlegen einer ersten vorgegebenen ohmschen Last an einen ersten elektrischen Anschluss des Netzwerkelements, damit dieses vom ersten Teilnehmerendgerät unter Verwendung eines Tiefpegel-Detektionsstroms erkannt werden kann;
Empfangen einer ersten elektrischen Leistung über den ersten elektrischen Anschluss des Netzwerkelements als Reaktion auf das Anlegen der ersten vorgegebenen ohmschen Last, wobei die erste elektrische Leistung einen höheren Strom und/oder eine höhere Spannung aufweist als der erste Tiefpegel-Detektionsstroms;
Umwandeln der ersten elektrischen Leistung zur Nutzung durch das Netzwerkelement;
Empfangen optischer Datenkommunikation über einen optischen Anschluss des Netzwerkelements;
Umwandeln der optischen Datenkommunikation in elektrische Datenkommunikation des Dienstanbieters;
Aufteilen der elektrischen Datenkommunikation des Dienstanbieters in eine oder mehrere Teilnehmerdatenkommunikationen; und
Übertragen mindestens einer der einen oder mehreren Teilnehmerdatenkommunikationen an das erste Teilnehmerendgerät über den ersten elektrischen Anschluss.

2. Verfahren nach Anspruch 1, wobei die erste vorbestimmte ohmsche Last so ausgewählt wird, dass sie den Leistungsbedarf des Netzwerkelements deckt.

3. Verfahren nach Anspruch 2, wobei das Netzwerkelement eine Erfassungsschaltung zum Anlegen der ersten vorbestimmten ohmschen Last umfasst, wobei die Erfassungsschaltung die erste vorbestimmte ohmsche Last umfasst, die zwischen stromführenden Leitern einer Übertragungsleitung (130, 1008) angeordnet ist.

4. Verfahren nach einem der Ansprüche 1 bis 3, das ferner das Senden einer ersten "Dying Gasp"-Nachricht oder eines ersten "Dying Gasp"-Signals über den optischen Anschluss des Netzwerkelements als Reaktion auf den Ausfall des Empfangs der ersten elektrischen Energie über den ersten elektrischen Anschluss umfasst.

5. Verfahren nach Anspruch 4, das ferner das Senden einer zweiten "Dying Gasp"-Nachricht oder eines zweiten "Dying Gasp"-Signals über den ersten elektrischen Anschluss des Netzwerkelements umfasst, als Reaktion auf den Ausfall der Stromversorgung über den ersten elektrischen Anschluss.

6. Verfahren nach einem der Ansprüche 1 bis 5, das ferner umfasst:
Messen der vom Netzwerkelement verbrauchten elektrischen Leistung; und
Übermitteln der gemessenen Menge an elektrischer Energie, die vom Netzwerkelement verbraucht wird, unter Verwendung einer Netzwerknachricht, indem die Netzwerknachricht über den optischen Anschluss übertragen wird.

7. Verfahren nach einem der Ansprüche 1 bis 6, wobei die erste elektrische Energie eine elektrische Gleichstromleistung ist.

8. Verfahren nach einem der Ansprüche 1 bis 7, das ferner umfasst:
Senden eines Signals oder einer Netzwerknachricht an das erste Teilnehmerendgerät über den ersten elektrischen Anschluss, wobei das Signal oder die Netzwerknachricht das erste Teilnehmerendgerät auffordert, den Strom und/oder die Spannung der ersten elektrischen Energie anzupassen.

9. System zur Stromversorgung eines Netzwerkelements eines glasfaserbasierten Weitverkehrsnetzes, wobei das System ein Netzwerkelement (110, 404, 500, 700, 1000, 1200), mindestens ein Teilnehmerendgerät (134, 137, 702, 1010, 135, 705, 1302), mindestens ein elektrisches Leiterpaar oder Kabel (130, 1008) und mindestens eine optische Faser umfasst, wobei das Netzwerkelement umfasst:
mindestens einen optischen Anschluss, wobei jeder optische Anschluss so konfiguriert ist, dass er mit der mindestens einen optischen Faser gekoppelt werden kann, und wobei jeder optische Anschluss so angeordnet ist, dass er mindestens einen optischen Transceiver umfasst;
mindestens einen elektrischen Anschluss, der zur Kopplung mit dem mindestens einen elektrischen Leiterpaar oder Kabel (130, 1008) konfiguriert ist, um mit dem mindestens einen Teilnehmerendgerät (134, 137, 702, 1010, 135, 705, 1302) zu kommunizieren;
mindestens eine erste elektrische Kopplungsvorrichtung (124, 710, 1006), die elektrisch mit dem mindestens einen elektrischen Anschluss gekoppelt und so konfiguriert ist, dass sie die Erkennung des Netzwerkelements durch das mindestens eine Teilnehmerendgerät durch Anlegen einer vorbestimmten ohmschen Last unterstützt, und zwar zu dem Zweck, von dem mindestens einen Teilnehmerendgerät unter Verwendung eines Tiefpegel-Detektionsstroms über das mindestens eine elektrische Leiterpaar oder Kabel (130, 1008) erkannt zu werden, und wobei die mindestens eine erste elektrische Kopplungsvorrichtung so ausgelegt ist, dass sie eine elektrische Leistung, die einen höheren Strom und/oder eine höhere Spannung als den über den mindestens einen elektrischen Anschluss empfangenen Tiefpegel-Detektionsstrom aufweist, an einen mindestens einen Leistungswandler weiterleitet, der auf das Anlegen der vorgegebenen ohmschen Last reagiert, und wobei die mindestens eine erste elektrische Kopplungsvorrichtung so ausgelegt ist, dass sie Kommunikation über den mindestens einen elektrischen Anschluss überträgt;
mindestens eines der folgenden Elemente: eine erste Kommunikationsvorrichtung (122, 712, 1004), die elektrisch mit der mindestens einen ersten elektrischen Kopplungsvorrichtung gekoppelt ist, um mit dem mindestens einen Teilnehmerendgerät (134, 137, 702, 1010, 135, 705, 1302) zu kommunizieren;
eine zweite Kommunikationsvorrichtung (118, 120, 304, 502, 714, 1002, 1202), die elektrisch mit der mindestens einen ersten Kommunikationsvorrichtung und elektrisch mit dem mindestens einen optischen Anschluss gekoppelt ist, wobei die zweite Kommunikationsvorrichtung zur optischen Kommunikation über den mindestens einen optischen Anschluss dient; und
mindestens einen Stromwandler (126, 128), der elektrisch mit der mindestens einen ersten elektrischen Kopplungsvorrichtung gekoppelt ist, um die elektrische Energie für die Nutzung durch das Netzwerkelement umzuwandeln, wobei
das Netzwerkelement durch das mindestens eine Teilnehmerendgerät (134, 137, 702, 1010, 135, 705, 1302) mit Strom versorgt wird;
und wobei das mindestens eine Teilnehmerendgerät (134, 137, 702, 1010, 135, 705, 1302) so konfiguriert ist, dass es die ohmsche Last unter Verwendung des Tiefpegel-Detektionsstroms erfasst und dem Netzwerkelement elektrische Leistung bereitstellt, die einen höheren Strom und/oder eine höhere Spannung als der Tiefpegel-Detektionsstrom aufweist, wobei mindestens ein Teilnehmerendgerät umfasst:
eine Stromquelle (138) zum Erzeugen eines elektrischen Leistungssignals mit einem Strom und einer Spannung;
ein drittes Kommunikationsgerät (140, 704, 712, 1004, 1012) zum Senden und Empfangen elektrischer Datenkommunikationssignale zur Kommunikation mit dem Netzwerkelement (110, 404, 500, 700, 1000, 1200) und zum Senden einer "Dying Gasp"-Nachricht als elektrisches Daten-Kommunikationssignal an das Netzwerkelement als Reaktion auf den Verlust der Fähigkeit, das elektrische Leistungssignal zu erzeugen; und
eine zweite elektrische Kopplungsvorrichtung (132, 133) zum Koppeln mit dem elektrischen Leiterpaar oder Kabel (130, 1008) sowie zum Koppeln mit der Stromquelle (138) und zum Koppeln mit der dritten Kommunikationsvorrichtung (140, 704, 712, 1004, 1012) sowie zum Zusammenführen des elektrischen Stromsignals mit den elektrischen Datenkommunikationssignalen zu einem kombinierten elektrischen WAN-Signal auf das elektrische Leiterpaar oder Kabel (130, 1008) zur Übertragung an das Netzwerkelement (110, 404, 500, 700, 1000, 1200).

10. System nach Anspruch 9, wobei das Netzwerkelement so konfiguriert ist, dass es als Reaktion auf den Verlust der elektrischen Energie eine "Dying Gasp"-Nachricht oder ein entsprechendes Signal über den mindestens einen elektrischen Anschluss sendet.

11. System nach Anspruch 9 oder 10, wobei die mindestens eine erste elektrische Kopplungsvorrichtung eine Erfassungsschaltung zum Anlegen der vorbestimmten ohmschen Last umfasst, wobei die Erfassungsschaltung die erste vorbestimmte ohmsche Last umfasst, die zwischen den mit Strom versorgten Leitern einer Übertragungsleitung (130, 1008) angeordnet ist, wobei die Übertragungsleitung das mindestens eine elektrische Leiterpaar oder Kabel ist.

12. System nach einem der Ansprüche 9 bis 11, wobei das Netzwerkelement (110, 404, 500, 700, 1000, 1200) so konfiguriert ist, dass es die von dem Netzwerkelement verbrauchte elektrische Leistung misst, und wobei das Netzwerkelement so konfiguriert ist, dass es die gemessene elektrische Leistung unter Verwendung einer über den mindestens einen optischen Anschluss übertragenen Netzwerknachricht übermittelt.

13. System nach einem der Ansprüche 9 bis 12, wobei das Netzwerkelement (110, 404, 500, 700, 1000, 1200) so konfiguriert ist, dass es die von dem Netzwerkelement verbrauchte elektrische Leistung auf zwei oder mehr elektrische Leistungen verteilt, die durch zwei oder mehr der mindestens einen ersten elektrischen Kopplungsvorrichtungen geleitet werden.

14. System nach einem der Ansprüche 9 bis 13, wobei das Netzwerkelement (110, 404, 500, 700, 1000, 1200) so konfiguriert ist, dass es als Reaktion auf den Verlust der elektrischen Energie eine "Dying Gasp"-Nachricht oder ein entsprechendes Signal über den mindestens einen optischen Anschluss sendet.

## Revendications

1. Procédé pour alimenter électriquement un élément de réseau (110, 404, 500, 700, 1000, 1200) d'un réseau étendu (WAN) par un premier terminal d'abonné (134, 137, 702, 1010, 135, 705, 1302), le procédé comprenant :
au niveau de l'élément de réseau :
l'application d'une première charge résistive prédéterminée à un premier port électrique de l'élément de réseau afin de pouvoir être détecté par le premier terminal d'abonné à l'aide d'un premier courant de détection de faible intensité ;
recevoir une première alimentation électrique par l'intermédiaire du premier port électrique de l'élément de réseau en réponse à l'application de la première charge résistive prédéterminée, la première puissance électrique comportant un courant et/ou une tension supplémentaires par rapport au premier courant de détection de faible intensité ;
convertir cette première puissance électrique en vue de son utilisation par l'élément de réseau ;
recevoir des communications de données optiques par l'intermédiaire d'un port optique de l'élément de réseau ;
convertir les communications de données optiques en communications de données électriques du fournisseur de services ;
désagréger les communications de données électriques du fournisseur de services en une ou plusieurs communications de données d'abonné ; et
transmettre au moins une desdites une ou plusieurs communications de données d'abonnés vers le premier terminal d'abonné via le premier port électrique.

2. Procédé selon la revendication 1, dans lequel la première charge résistive prédéterminée est choisie de manière à indiquer les besoins en puissance de l'élément de réseau.

3. Procédé selon la revendication 2, dans lequel l'élément de réseau comprend un circuit de détection destiné à appliquer la première charge résistive prédéterminée, le circuit de détection comprenant la première charge résistive prédéterminée placée entre des conducteurs sous tension d'une ligne de transmission (130, 1008).

4. Procédé selon l'une quelconque des revendications 1 à 3, comprenant en outre l'envoi d'un premier message ou signal « Dying Gasp » via le port optique de l'élément de réseau en réponse à la perte de réception de la première alimentation électrique via le premier port électrique.

5. Procédé selon la revendication 4, comprenant en outre l'envoi d'un deuxième message ou signal « Dying Gasp » via le premier port électrique de l'élément de réseau en réponse à la perte de l'alimentation électrique via ledit premier port électrique.

6. Procédé selon l'une quelconque des revendications 1 à 5, comprenant en outre :
la mesure de la quantité d'énergie électrique consommée par l'élément de réseau ; et
la transmission de la quantité de puissance électrique par l'élément de réseau à l'aide d'un message réseau, en transmettant ledit message réseau via le port optique.

7. Procédé selon l'une quelconque des revendications 1 à 6, dans lequel la première alimentation électrique est une alimentation électrique en courant continu.

8. Procédé selon l'une quelconque des revendications 1 à 7, comprenant en outre :
la transmission d'un signal ou d'un message réseau vers le premier terminal d'abonné via le premier port électrique, le signal ou le message réseau demandant au premier terminal d'abonné d'ajuster le courant et/ou la tension de la première alimentation électrique.

9. Système destiné à alimenter un élément de réseau d'un réseau étendu à fibre optique, le système comprenant un élément de réseau (110, 404, 500, 700, 1000, 1200), au moins un terminal d'abonné (134, 137, 702, 1010, 135, 705, 1302), au moins une paire de fils électriques ou un câble (130, 1008) et au moins une fibre optique, dans lequel l'élément de réseau comprend :
au moins un port optique, chaque port optique étant configuré pour se coupler à ladite au moins une fibre optique et chaque port optique étant agencé pour inclure au moins un émetteur-récepteur optique ;
au moins un port électrique configuré pour se coupler à la au moins une paire de fils électriques ou au moins un câble (130, 1008) afin de communiquer avec le au moins un terminal d'abonné (134, 137, 702, 1010, 135, 705, 1302) ;
au moins un premier dispositif de couplage électrique (124, 710, 1006) couplé électriquement audit au moins un port électrique et configuré pour permettre la détection de l'élément de réseau par ledit au moins un terminal d'abonné grâce à l'application d'une charge résistive prédéterminée, afin d'être détectable par ledit au moins un terminal d'abonné à l'aide d'un courant de détection de faible intensité traversant ladite au moins une paire de fils électriques ou ledit câble (130, 1008), et dans lequel ledit au moins un premier dispositif de couplage électrique est adapté à acheminer une alimentation électrique comportant un courant et/ou une tension supplémentaires par rapport au courant de détection de faible intensité reçu par l'intermédiaire dudit au moins un port électrique vers un au moins un convertisseur de puissance réagissant à l'application de la charge résistive prédéterminée, et dans lequel ledit au moins un premier dispositif de couplage électrique est adapté pour acheminer des communications par l'intermédiaire dudit au moins un port électrique ;
au moins l'un parmi un premier dispositif de communication (122, 712, 1004) couplé électriquement à ledit au moins un premier dispositif de couplage électrique pour communiquer avec ledit au moins un terminal d'abonné (134, 137, 702, 1010, 135, 705, 1302) ;
un deuxième dispositif de communication (118, 120, 304, 502, 714, 1002, 1202) couplé électriquement audit au moins un premier dispositif de communication et couplé électriquement audit au moins un port optique, et dans lequel le deuxième dispositif de communication est destiné à la communication optique via ledit au moins un port optique ; et
au moins un convertisseur de puissance (126, 128) couplé électriquement à ledit au moins un premier dispositif de couplage électrique pour convertir la puissance électrique destinée à être utilisée par l'élément de réseau, de sorte que
l'élément de réseau est alimenté par le ou les terminaux d'abonnés (134, 137, 702, 1010, 135, 705, 1302) ;
et dans lequel ledit au moins un terminal d'abonné (134, 137, 702, 1010, 135, 705, 1302) est configuré pour détecter la charge résistive à l'aide du courant de détection de bas niveau, et pour fournir à l'élément de réseau une puissance électrique présentant un courant et/ou une tension supplémentaires par rapport au courant de détection de bas niveau, au moins un terminal d'abonné comprenant :
une source d'alimentation (138) destinée à produire un signal d'alimentation électrique comportant un courant et une tension ;
un troisième dispositif de communication (140, 704, 712, 1004, 1012) destiné à émettre et à recevoir des signaux de communication de données électriques pour communiquer avec l'élément de réseau (110, 404, 500, 700, 1000, 1200) et à transmettre un message « Dying Gasp » sous la forme d'un signal de communication de données électriques à l'élément de réseau en réponse à la perte de la capacité à produire le signal d'alimentation électrique ; et
un deuxième dispositif de couplage électrique (132, 133) destiné à être couplé à la paire de fils électriques ou au câble (130, 1008), à la source d'alimentation (138) et au troisième dispositif de communication (140, 704, 712, 1004, 1012) et pour combiner le signal d'alimentation électrique avec les signaux de communication de données électriques en un signal WAN électrique combiné sur la paire de fils ou le câble électrique (130, 1008) en vue de sa transmission à l'élément de réseau (110, 404, 500, 700, 1000, 1200).

10. Système selon la revendication 9, dans lequel l'élément de réseau est configuré pour envoyer un message ou un signal « Dying Gasp » via le au moins un port électrique en réponse à une perte d'alimentation électrique.

11. Système selon la revendication 9 ou 10, dans lequel ledit au moins un premier dispositif de couplage électrique comprend un circuit de détection destiné à appliquer la charge résistive prédéterminée, ledit circuit de détection comprenant ladite première charge résistive prédéterminée placée entre les conducteurs sous tension d'une ligne de transmission (130, 1008), ladite ligne de transmission étant ladite au moins une paire de fils électriques ou ledit câble.

12. Système selon l'une quelconque des revendications 9 à 11, dans lequel l'élément de réseau (110, 404, 500, 700, 1000, 1200) est configuré pour mesurer la quantité de puissance électrique utilisée par l'élément de réseau, et dans lequel l'élément de réseau est configuré pour transmettre la quantité mesurée de puissance électrique à l'aide d'un message de réseau transmis via le au moins un port optique.

13. Système selon l'une quelconque des revendications 9 à 12, dans lequel l'élément de réseau (110, 404, 500, 700, 1000, 1200) est configuré pour répartir la charge de l'énergie électrique utilisée par l'élément de réseau entre deux ou plusieurs flux d'énergie électrique transmis par deux ou plusieurs des au moins un premier dispositif de couplage électrique.

14. Système selon l'une quelconque des revendications 9 à 13, dans lequel l'élément de réseau (110, 404, 500, 700, 1000, 1200) est configuré pour envoyer un message ou un signal « Dying Gasp » via le au moins un port optique en réponse à une perte d'alimentation électrique.
